# EUROPÄISCHE PATENTSCHRIFT

(11) **EP 3 066 272 B1**
(45) Veröffentlichungstag und Bekanntmachung des Hinweises auf die Patenterteilung: **04.04.2018**
(21) Anmeldenummer: 14802593.5
(22) Anmeldetag: 05.11.2014
(51) Int. Cl.: E04C 2/12, E04C 2/34

(54) **KERNSCHICHT AUFWEISEND HOLZELEMENTE, INSBESONDERE HOLZELEMENTE MIT WELLENSTRUKTUR**
CORE LAYER HAVING WOOD ELEMENTS, IN PARTICULAR WOOD ELEMENTS HAVING A CORRUGATED STRUCTURE
COUCHE CENTRALE COMPORTANT DES ÉLÉMENTS EN BOIS, NOTAMMENT DES ÉLÉMENTS EN BOIS À STRUCTURE ONDULÉE

(30) Priorität: 06.11.2013 EP 13005226
(43) Veröffentlichungstag der Anmeldung: 14.09.2016
(73) Patentinhaber: Wood Innovations Ltd., 9492 Eschen (LI)
(72) Erfinder: ECKSTEIN, Thomas, 01159 Dresden (DE); MOELLER, Achim, 01157 Dresden (DE); DANZER, Hans-Joachim, 9492 Eschen (LI)
(74) Vertreter: Ricker, Mathias
(86) Internationale Anmeldenummer: PCT/EP2014/002965
(87) Internationale Veröffentlichungsnummer: WO 2015/067362

(56) Entgegenhaltungen:
- EP-A2- 0 855 478
- BE-A- 547 811
- CH-A- 254 025
- DE-A1- 1 759 648
- DE-A1- 4 201 201
- DE-A1-102008 022 805
- DE-C- 835 646

## Beschreibung

### GEBIET DER ERFINDUNG

Die vorliegende Erfindung betrifft eine Kernschicht, welche zick-zack-förmig ausgebildete Holzelemente aufweist, vorzugsweise Holzelemente mit Wellenstruktur, welche zur Herstellung eines Mehrschichtverbunds oder in einem Mehrschichtverbund geeignet ist, vorzugsweise zur Herstellung einer Leichtbauplatte, sowie einen Mehrschichtverbund, welcher die Kernschicht aufweist. Die Erfindung betrifft ferner Verfahren zur Herstellung der Kernschicht und des Mehrschichtverbunds.

### HINTERGRUND DER ERFINDUNG

Es ist bekannt, Verbundmaterialien zur Herstellung von Mehrschichtverbunden zu verwenden, die im Vergleich zu ihrem Gewicht eine relativ hohe mechanische Stabilität aufweisen. Derartige Mehrschichtverbünde werden beispielsweise in Form von Leichtbauplatten verwendet.

CH 254025 betrifft einen Mehrschichtverbund, der zwei Deckplatten aufweist und eine Kernschicht dazwischen, wobei die Kernschicht mindestens eine Schicht gefalteten Furniers aufweist. Das Furnier ist in einem Winkel gegenüber der Faserrichtung im Holz gefaltet.

DE 42 01 201 betrifft Halbzeug oder Fertigprodukt aus Holz, welche aus plättchenförmigen Flächenelementen hergestellt sind. Die plättchenförmigen Elemente können zick-zack-förmig ausgebildet sein. Sie können in regelloser Verteilung zusammen mit Flächenelementen oder vorliegen oder sich schuppenförmig überlagern.

DE 10 2008 022 806 betrifft eine Leichtbauplatte mit einer wellenförmigen Holzfurnierschicht. Die Wellen können zick-zack-förmig ausgebildet sein.

BE 547 811 betrifft eine Kernschicht bestehend aus zwei zick-zack-förmig ausgebildeten Holzelementen, welche zwischen zwei Deckschichten angeordnet sind. Die Holzelemente sind so angeordnet, dass ihre Kanten vorzugsweise einen Winkel von 90° miteinander einschließen.

DE 10 2008 022805 A1 betrifft eine Wellfurnierplatte und daraus aufgebaute Leichtbauplatten. Die Wellenstruktur der verwendeten Holzelemente kann zick-zack-förmig, Sinusförmig und Trapez-förmig sein. Die Holzelemente sind ineinander gestapelt.

EP 1 923 209 betrifft eine Leichtbau-Verbundplatte mit Außenlagen und einer Mittellage, wobei die Mittellage in einem Winkel zur Ebene der Leichtbau-Verbundplatte angeordnet ist.

Diesen Mehrschichtverbunden aus dem Stand der Technik ist gemeinsam, dass die Kernschicht eine aufgelockerte Struktur aufweisen kann. Bei Krafteinwirkung senkrecht zur Oberfläche des Mehrschichtverbunds weist dieser eine dämpfende Wirkung auf, da sich die Kernschicht zumindest teilweise komprimieren lässt. Ein Nachteil dieser aufgelockerten Kernschichten liegt darin, dass sie eine geringe Homogenität aufweisen können, die durch relativ große Hohlräume in der Kernschicht hervorgerufen wird. Dann können beim Einbringen von Befestigungsmitteln, wie beispielsweise Nägeln, Möbelverbinder oder Schrauben, diese auf Hohlräume in den aufgelockerten Kernschichten treffen. Dies kann eine eingeschränkte Stabilität des Befestigungsmittels im Mehrschichtverbund zur Folge haben. Dies kann wiederum dazu führen, dass die Stabilität des Mehrschichtverbunds an einem Träger, beispielsweise an einer Wand, beeinträchtigt werden kann, wenn dieser mit Hilfe von Nägeln oder Schrauben an der Wand befestigt werden soll. Außerdem erfordert die Herstellung großformatiger Kernlagen entsprechend große Furnierstücke in hoher Qualität.

### AUFGABE DER ERFINDUNG

Eine Aufgabe der vorliegenden Erfindung besteht darin, eine Kernschicht und einen Mehrschichtverbund enthaltend die Kernschicht bereit zu stellen, welcher eine verbesserte Stabilität bezüglich der Befestigung mit Nägeln, Möbelverbindern oder Schrauben oder äquivalenten Befestigungsmitteln an einen Träger, beispielsweise einer Wand, aufweist, und welche eine erhöhte Traglast bei möglichst niedrigem Gewicht ermöglicht.

### ZUSAMMENFASSUNG DER ERFINDUNG

Diese Aufgabe wird erfindungsgemäß mit einer Kernschicht gemäß Anspruch 1 gelöst, welche für einen Mehrschichtverbund geeignet ist, der mindestens eine Deckschicht und die Kernschicht aufweist, wobei die Deckschicht so angeordnet ist, dass sie die Kernschicht zumindest teilweise bedeckt und mit dieser in fester Verbindung steht, und dem Mehrschichtverbund aufweisend die Kernschicht, wobei die Kernschicht Holzelemente aufweist, welche Bereiche aufweisen, die zick-zack-förmig angeordnet sind, wie in Anspruch 1 definiert. Die nachfolgend verwendeten Begriffe in Anführungs- und Schlusszeichen sind im Sinne der Erfindung definiert.

### DETAILLIERTE BESCHREIBUNG DER ERFINDUNG

### Erster Aspekt der Erfindung

**Erfindungsgemäße Kernschicht aufweisend zick-zack-förmig ausgebildete Elemen**te aus **Holz**

In einem ***ersten Aspekt*** betrifft die Erfindung eine Kernschicht, wobei die Kernschicht Elemente aus Holz aufweist, welche plättchenförmige Bereiche aufweisen, die zick-zack-förmig angeordnet sind, wobei ein zick-Bereich eines Elements mit einem angrenzenden zack-Bereich des Elements eine gemeinsame Kante zwischen sich ausbilden, derart, dass das Element zick-zack-förmig ausgebildet ist, und wobei Elemente in der Kernschicht so angeordnet sind, dass zwei derartige Kanten zweier Elemente, die gleich oder verschieden voneinander sein können, sich in einem Winkel überkreuzen, der verschieden von Null ist, wobei die zwei Elemente an der Überkreuzungsstelle fest miteinander verbunden sind, wie in Anspruch 1 definiert.

Insbesondere betrifft die Erfindung eine Kernschicht, welche für einen Mehrschichtverbund geeignet ist, der mindestens eine Deckschicht und eine Kernschicht aufweist, wobei die Deckschicht so angeordnet ist, dass sie die Kernschicht zumindest teilweise bedeckt und mit dieser in fester Verbindung steht, wobei die Kernschicht Elemente aus Holz aufweist, welche plättchenförmige Bereiche aufweisen, die zick-zack-förmig angeordnet sind, wobei ein zick-Bereich eines Elements mit einem angrenzenden zack-Bereich des Elements eine gemeinsame Kante zwischen sich ausbilden, derart, dass das Element zick-zack-förmig ausgebildet ist, und wobei Elemente in der Kernschicht so angeordnet sind, dass zwei derartige Kanten zweier Elemente, die gleich oder verschieden voneinander sein können, sich in einem Winkel überkreuzen, der verschieden von Null ist, wobei die zwei Elemente an der Überkreuzungsstelle fest miteinander verbunden sind.

Die Elemente aus Holz liegen in der Kernschicht in (α) einer regellosen Verteilung vor. Sie können in der Kernschicht auch (β) regellos nebeneinander und übereinander angeordnet sein. Die Elemente aus Holz können in der Kernschicht auch (γ) regellos angeordnet sein, und die Kanten können sich in verschiedenen Winkeln überkreuzen. Die Elemente aus Holz können auch die Verteilungen (α) und (β) oder die Verteilungen (α) und (γ) oder die Verteilungen (β) und (γ) oder die Verteilungen (a), (β) und (γ) aufweisen.

Wie in dieser Offenbarung verwendet, bedeutet der Begriff *"Kernschicht, welche für einen Mehrschichtverbund geeignet ist"* eine Kernschicht, welche zur Herstellung eines Mehrschichtverbunds geeignet ist, oder welche in einem Mehrschichtverbund vorliegen kann.

Der Begriff *"Kernschicht"* bedeutet eine Schicht, welche eine aufgelockerte Struktur aufweist, also Hohlräume aufweist. Erfindungsgemäß weist die Kernschicht Elemente aus Holz auf, welche plättchenförmige Bereiche aufweisen. Diese Bereiche sind im Element zick-zack-förmig angeordnet, wobei ein Zick-Bereich eines Elements mit einem angrenzenden Zack-Bereich des Elements eine gemeinsame Kante zwischen sich ausbildet, derart, dass das Holzelement zick-zack-förmig ausgebildet ist.

Der Begriff *"zick-zack-förmig ausgebildet"* wird synonym zum Begriff *"zick-zack-förmig ausgeformt"* verwendet. Die zick-zack-förmig ausgebildeten Elemente sind in der Kernschicht so angeordnet sind, dass zwei derartige Kanten zweier Elemente sich in einem Winkel überkreuzen, der verschieden von null ist. An der Überkreuzungsstelle der Kanten sind die zwei Elemente fest miteinander verbunden. Ein geeignetes Verbindungsmittel ist vorzugsweise ein Kleber. Geeignete Kleber sind im Stand der Technik bekannt.

Der Begriff *"Deckschicht"* bedeutet eine Schicht eines Materials, welches vorzugsweise als Träger für die Kernschicht dient. Erfindungsgemäß ist die Deckschicht so angeordnet, dass sie die Kernschicht zumindest teilweise bedeckt, vorzugsweise vollständig, und mit dieser in fester Verbindung steht. Die Kernschicht kann auch von mindestens zwei Deckschichten zumindest teilweise bedeckt sein und mit diesen in fester Verbindung stehen. Vorzugsweise befindet sich dann die Kernschicht zwischen den beiden Deckschichten. Die Deckschicht kann aus Holz bestehen oder Holz aufweisen. Andere Materialien wie Bleche oder Kunststoffe sind gleichfalls verwendbar.

Der Begriff *"zumindest teilweise bedeckt"* schließt ein, dass die Deckschicht die Kernschicht auch vollständig überdecken oder bedecken kann.

Der Begriff *"Mehrschichtverbund"* bedeutet einen Verbund aus mindestens einer Kernschicht und mindestens einer Deckschicht.

Der Begriff *"Winkel, welcher verschieden von Null ist"* schließt ein, dass der Winkel weder 180° noch 360° beträgt.

Der Begriff *"Element"* bedeutet ein Bauteil der Kernschicht oder des Mehrschichtverbunds. Der Begriff *"Holzelement"* bedeutet auch ein Objekt oder einen Gegenstand aus Holz.

Der Begriff *"plättchenförmige Bereiche"* schließt Bereiche ein, die in Form von Flächen ausgebildet sind. Die Flächen können eben, d.h. plan, oder auch uneben sein, d.h. nicht plan, vorzugsweise dann gekrümmt, vorzugsweise konvex oder konkav, oder gewellt sein.

Der Begriff *"Elemente aus Holz, welches plättchenförmige Bereiche aufweist, die zick-zack-förmig angeordnet sind"* schließt ein plättchenförmiges Holzelement ein, welches derart geformt ist, dass es zick-zack-förmig ausgebildet vorliegt, etwa weil das Plättchen um eine Kante gefaltet ist. Ein derartiges Plättchen kann auch zweimal gefaltet sein, derart, dass einem zick-Bereich ein zack-Bereich folgt, welchem wiederum ein zick-Bereich folgt. Ein derartiges Plättchen kann auch dreimal gefaltet sein, derart, dass einem zick-Bereich ein zack-Bereich folgt, welchem ein zick-Bereich folgt, welchem wiederum ein zack-Bereich folgt; usw. Dann entstehen Holzelemente mit einer Wellenstruktur.

Der Begriff *"Welle"* oder *"Wellenstruktur"* bedeutet sich wiederholende Einheiten aus einem Holzelement.

Vorzugsweise sind Kanten, welche von zick- mit zack-Bereichen in einem Holzelement gebildet werden, parallel zueinander ausgerichtet.

Die Begriffe *"zick-Bereich"* und *"zack-Bereich"* werden austauschbar verwendet. Sowohl der zick- wie auch der zack-Bereich sind plättchenförmig. Diese Bereiche können plan oder nicht-plan sein, wie oben definiert.

Demzufolge betrifft die Erfindung in einer Ausführungsform auch eine Kernschicht, in welcher Holzelemente sich wiederholende Einheiten aus plättchenförmigen zick- und zack-Bereichen aufweisen, die aneinander grenzen, wobei die zwischen den Bereichen ausgebildeten gemeinsamen Kanten vorzugsweise parallel zueinander verlaufen. Durch eine derartige Anordnung von zick- mit zack-Bereichen wird das Element zick-zack-förmig ausgebildet bzw. ausgeformt. Es kann somit eine Wellenstruktur aufweisen.

Der Begriff *"Kante",* wie hierin verwendet, schließt Begriffe wie *"Übergangsbereich zwischen einem zick- und dem angrenzenden zack-Bereich"* ein. Dieser Übergangsbereich kann eine Kante sein, welche scharf ausgeprägt ist. Der Begriff schließt auch eine Kante ein, welche wie eine gekrümmte Fläche oder wie eine plane (ebene) Fläche ausgestaltet ist. Somit schließt der Begriff *"Kante",* wie hierin verwendet, eine scharfe Kante in Form einer Linie wie auch eine wellige oder gewellte Kante in der Form einer kurvenförmigen Ebene oder einen gekrümmten Bereich zwischen einem zick-Bereich und einem zack-Bereich ein. In dieser Ausführungsform weisen die zick-zack-Bereiche eine wellenförmige Struktur auf, d.h. einem Wellental folgt ein Wellenberg und umgekehrt.

Der Begriff *"Welle"* wird durch eine sich räumlich ausdehnenden Schwingung veranschaulicht.

In einer Ausführungsform weist die Welle im mathematischen Sinn sowohl eine positive wie auch eine negative Halbwelle auf. Sie hat somit eine positive wie auch eine negative Amplitude.

In einer weiteren Ausführungsform weist die Welle im mathematischen Sinn lediglich positive Halbwellen auf. Sie hat somit positive Amplituden und keine negativen Amplituden.

Der Begriff *"gekrümmt ausgebildete Fläche"* bedeutet eine konvex ausgebildete Fläche oder eine konkav ausgebildete Fläche oder eine Fläche, die sowohl einen konvexen wie auch konkaven Anteil aufweist. Insbesondere bedeutet der Begriff *"gekrümmt"* auch *"kontinuierlich gekrümmt".*

In einer Ausführungsform betrifft die Erfindung eine Kernschicht, wobei
(a) die plättchenförmigen Bereiche der Holzelemente plane Flächen sind und die zwischen den planen Flächen ausgebildete Kante ein plane Fläche ist;
(b) die plättchenförmigen Bereiche der Holzelemente gekrümmt ausgebildete Flächen sind und die zwischen den gekrümmten Flächen ausgebildete Kante eine gekrümmt ausgebildete Fläche ist, vorzugsweise eine konvex ausgebildete Fläche;
(c) die plättchenförmigen Bereiche der Holzelemente gekrümmt ausgebildete Flächen sind und die zwischen den gekrümmten Flächen ausgebildete Kante geradenförmig ist;
(d) die plättchenförmigen Bereiche der Holzelemente gekrümmt ausgebildete Flächen sind und die zwischen den gekrümmten Flächen ausgebildete Kante eine plan ausgebildete Fläche ist.

In einer Ausführungsform weist die Kernschicht zick-zack-förmig ausgebildete Elemente aus Holz auf, welche plättchenförmige Bereiche aufweisen, die zick-zack-förmig angeordnet sind, wobei ein zick-Bereich eines Elements mit einem angrenzenden zack-Bereich des zick-zack-förmig ausgebildeten Elements eine gemeinsame Kante zwischen sich ausbildet, und wobei zick-zack-förmig ausgebildete Elemente in der Kernschicht so angeordnet sind, dass zwei derartige Kanten zweier zick-zack-förmig ausgebildeter Elemente, die gleich oder verschieden voneinander sein können, sich in einem Winkel überkreuzen, der verschieden von Null ist, wobei die zwei Elemente an der Überkreuzungsstelle fest miteinander verbunden sind, wobei die Holzelemente in der Kernschicht eine oder mehrere der nachfolgenden Anordnungen (a) bis (d) aufweisen:
(a) die plättchenförmigen Bereiche der Holzelemente sind plane Flächen und die zwischen den planen Flächen ausgebildete Kante ist eine plane Fläche;
(b) die plättchenförmigen Bereiche der Holzelemente sind gekrümmt ausgebildete Flächen und die zwischen den gekrümmten Flächen ausgebildete Kante ist eine gekrümmt ausgebildete Fläche;
(c) die plättchenförmigen Bereiche der Holzelemente sind gekrümmt ausgebildete Flächen und die zwischen den gekrümmten Flächen ausgebildete Kante ist geradenförmig;
(d) die plättchenförmigen Bereiche der Holzelemente sind gekrümmt ausgebildete Flächen und die zwischen den gekrümmten Flächen ausgebildete Kante ist eine plan ausgebildete Fläche;
und wobei
(α) die Elemente aus Holz in der Kernschicht in einer regellosen Verteilung vorliegen; oder
(β) wobei die Elemente aus Holz in der Kernschicht regellos nebeneinander und übereinander angeordnet sind; oder
(γ) wobei die Elemente aus Holz in der Kernschicht regellos angeordnet sind, und die Kanten sich in verschiedenen Winkeln überkreuzen.

In einer Ausführungsform weist die Kernschicht die Anordnung (a) in Kombination mit der Verteilung (a), (β) oder (γ) auf, oder in Kombination mit zwei oder drei dieser Verteilungen.

In einer weiteren Ausführungsform weist die Kernschicht die Anordnung (a) und (b) in Kombination mit der Verteilung (a), (β) oder (γ) auf, oder in Kombination mit zwei oder drei dieser Verteilungen.

In einer weiteren Ausführungsform weist die Kernschicht die Anordnung (a) und (c) in Kombination mit der Verteilung (a), (β) oder (γ) auf, oder in Kombination mit zwei oder drei dieser Verteilungen.

In einer weiteren Ausführungsform weist die Kernschicht die Anordnung (a) und (d) in Kombination mit der Verteilung (α), (β) oder (γ) auf, oder in Kombination mit zwei oder drei dieser Verteilungen.

In einer weiteren Ausführungsform weist die Kernschicht die Anordnung (a) und (b) und (c) in Kombination mit der Verteilung (α), (β) oder (γ) auf, oder in Kombination mit zwei oder drei dieser Verteilungen.

In einer weiteren Ausführungsform weist die Kernschicht die Anordnung (a) und (b) und (d) in Kombination mit der Verteilung (α), (β) oder (γ) auf, oder in Kombination mit zwei oder drei dieser Verteilungen.

In einer weiteren Ausführungsform weist die Kernschicht die Anordnung (a) und (c) und (d) in Kombination mit der Verteilung (α), (β) oder (γ) auf, oder in Kombination mit zwei oder drei dieser Verteilungen.

In einer weiteren Ausführungsform weist die Kernschicht die Anordnung (a) und (b) und (c) und (d) in Kombination mit der Verteilung (a), (β) oder (γ) auf, oder in Kombination mit zwei oder drei dieser Verteilungen.

In einer weiteren Ausführungsform weist die Kernschicht die Anordnung (b) in Kombination mit der Verteilung (α), (β) oder (γ) auf, oder in Kombination mit zwei oder drei dieser Verteilungen.

In einer weiteren Ausführungsform weist die Kernschicht die Anordnung (b) und (c) in Kombination mit der Verteilung (α), (β) oder (γ) auf, oder in Kombination mit zwei oder drei dieser Verteilungen.

In einer weiteren Ausführungsform weist die Kernschicht die Anordnung (b) und (d) in Kombination mit der Verteilung (α), (β) oder (γ) auf, oder in Kombination mit zwei oder drei dieser Verteilungen.

In einer weiteren Ausführungsform weist die Kernschicht die Anordnung (b) und (c) und (d) in Kombination mit der Verteilung (α), (β) oder (γ) auf, oder in Kombination mit zwei oder drei dieser Verteilungen.

In einer weiteren Ausführungsform weist die Kernschicht die Anordnung (c) in Kombination mit der Verteilung (α), (β) oder (γ) auf, oder in Kombination mit zwei oder drei dieser Verteilungen.

In einer weiteren Ausführungsform weist die Kernschicht die Anordnung (c) und (d) in Kombination mit der Verteilung (α), (β) oder (C) auf, oder in Kombination mit zwei oder drei dieser Verteilungen.

In einer weiteren Ausführungsform weist die Kernschicht die Anordnung (d) in Kombination mit der Verteilung (α), (β) oder (γ) auf, oder in Kombination mit zwei oder drei dieser Verteilungen.

In einer Ausführungsform der Kernschicht weisen zick-zack-förmig ausgebildete Holzelemente sich wiederholende Einheiten aus zick- und zack-Bereichen auf, wobei die zwischen den Bereichen ausgebildeten gemeinsamen Kanten vorzugsweise parallel zueinander verlaufen, derart, dass die Holzelemente eine Wellenform aufweisen.

Die Welle kann bezüglich ihrer Amplitude und/oder Wellenlänge variiert werden. Dadurch kann die Dicke der Kernschicht ebenso beeinflusst werden wie ihre Steifigkeit.

In einer Ausführungsform wird die Welle gebildet aus
(a') Holzelementen (a), derart, dass die Welle im Längsschnitt gesehen sich wiederholende Einheiten in Form eines Trapezes aufweist; oder
(b') Holzelementen (b), derart, dass die Welle im Längsschnitt gesehen sich wiederholende Einheiten in Form einer Sinus-Funktion aufweist.

Es wurde überraschenderweise gefunden, dass sich die ohnehin gute mechanische Festigkeit, etwa die die hohe Druck- und Schubfestigkeit und -steifigkeit, einer Kernschicht enthaltend Holzelemente (a) bis (d) noch deutlich verbessern lässt, wenn die Kernschicht insbesondere Holzelemente (b') enthält oder aus diesen Holzelementen besteht.

Kanten bzw. Holzelemente der erfindungsgemäßen Deckschicht können dadurch erzeugt werden, dass ein plättchenförmiges Element aus Holz geformt oder gefaltet wird. Vorzugsweise ist dann das plättchenförmige Element als Furnier ausgestaltet.

Geeignete Vorrichtungen zum Formen oder Falten sind aus dem Stand der Technik bekannt. Vorzugsweise kann ein plättchenförmiges Holzelement durch ein schnelllaufendes Profilwalzenpaar geleitet werden, wie in DE 42 01 201 beschrieben, wobei das Profil so ausgestaltet wird, dass eine oder mehrere der Anordnungen (a) bis (d) ausgebildet werden. Vorzugsweise erfolgt das Formen oder Falten im Wesentlichen quer zur Holzfaserrichtung. In einer Ausführungsform wird dabei die zuvor durch Einwirken von Feuchtigkeit und Wärme plastifizierte Holzstruktur geformt oder geknickt, d.h. an der jeweiligen Faltkante vorzugsweise durch örtliches Stauchen der Holzfasern gelenkig gestaltet, ohne dass der Zusammenhalt des Holzteiles geschwächt wird. Die Formung oder Faltung kann so durchgeführt werden, dass ein Zurückklappen der zick-zack-förmig angeordneten Bereiche im zick-zack-förmig ausgebildeten (ausgeformten) Element in die Ausgangslage zumindest weitgehend vermieden werden kann.

In einer weiteren Ausführungsform wird die Kante hergestellt durch Schneiden. In einer Ausführungsform wird dazu Holz mittels eines geeigneten Messers oder einer geeigneten Schneide, welche in einer zick-zack-förmigen Art und Weise profiliert ist, geschnitten. Vorrichtungen und Verfahren sind aus dem Stand der Technik bekannt oder können analog zu diesem Stand der Technik gestaltet werden.

In einer weiteren Ausführungsform werden die Kante und das Holzelement hergestellt durch Formen wie in US 2013/0001827 beschrieben.

In einer Ausführungsform wird das Falten oder Schneiden oder Formen so durchgeführt, dass die Länge der Fasern im resultierenden Holzelement mindestens zweimal so lang ist wie die Dicke eines zick-förmigen oder zack-förmigen Bereichs.

Der Begriff *"Dicke"* bedeutet den kleinsten Abstand zwischen zwei Oberflächen eines zick- bzw. eines zack-Bereichs. Diese Oberflächen sind durch die Dicke der plättchenförmigen zick- bzw. zack-Bereiche voneinander beabstandet.

In einer Ausführungsform liegt die Dicke des plättchenförmigen Elements im Bereich von 0,2 mm bis 2 mm.

Die Höhe der zick-zack-förmig ausgebildeten Holzelemente liegt typischerweise im Bereich von 0,8 mm bis 8 mm.

Der Begriff *"Höhe"* ist definiert als der kürzeste Abstand zwischen zwei imaginären Ebenen, zwischen welche das zick-zack-förmige Holzelement angeordnet werden kann, derart, dass die Kanten, welche zwischen zick-Bereichen und zack-Bereichen des zick-zack-förmig ausgebildeten Holzelements gebildet werden, innerhalb einer dieser Ebenen liegen.

In einer Ausführungsform ist die Dicke des Holzelements im Bereich von 0,2 mm bis 2 mm und die Höhe des zick-zack-förmig ausgebildeten Holzelements im Bereich von 0,8 mm bis 8 mm.

In einer Ausführungsform beträgt die Dicke des zick-zack-förmig ausgebildeten Holzelements höchstens einem Zehntel der Dicke der Kernschicht. Dies sorgt für eine genügende Homogenität der Kernschicht.

Die Abmessungen der zick-zack-förmig ausgebildeten Holzelemente bezüglich Breite und Länge kann variieren. Vorzugsbereiche werden aus einem Bereich von 2 bis 20 cm ausgewählt.

Die durch Schneiden oder Falten erhaltenen zick-zack-förmig ausgebildeten oder ausgeformten Elemente können weiter zerkleinert werden, falls dies erwünscht ist. Geeignete Schneidvorrichtungen sind aus dem Stand der Technik bekannt.

Vorzugsweise verläuft oder verlaufen die durch den zick- und zack-Bereich oder die durch die zick- und zack-Bereiche gebildete Kante oder die Kanten nicht parallel zur Vorzugsrichtung der Fasern.

In einer Ausführungsform haben die Fasern in zwei verschiedenen Holzelementen die gleiche Vorzugsrichtung.

In einer weiteren Ausführungsform haben die Fasern in zwei verschiedenen Holzelementen verschiedene Vorzugsrichtungen.

In einer Ausführungsform verläuft die Kante, welche zwischen einem zick-Bereich und einem zack-Bereich des plättchenförmigen Holzelements gebildet wird, nicht parallel zur Faserrichtung des Holzelements.

Vorzugsweise verläuft die Kante, welche zwischen einem zick-Bereich und einem zack-Bereich des plättchenförmigen Holzelements gebildet wird senkrecht zur Faserrichtung des Holzelements.

Demzufolge ist diese Ausführungsform der Kernschicht auch dadurch gekennzeichnet, dass eine oder mehrere der besagten Kanten senkrecht zur Vorzugsrichtung der Fasern des plättchenförmigen Holzelements verläuft oder verlaufen.

Dies bedeutet vorzugsweise auch, dass in einer Ausführungsform die Richtung der Fasern im Holzelement in Richtung der zick-zack-förmig angeordneten aneinander grenzenden plättchenförmigen Bereiche und senkrecht zu deren gemeinsamen Kanten verläuft.

Der Begriff *"senkrecht zur Faserrichtung"* bedeutet, dass auch eine Abweichung in einem Winkel von etwa bis zu 30 ° möglich ist.

In einer Ausführungsform weist die erfindungsgemäße Kernschicht erste plättchenförmige Holzelemente mit zick-zack-förmig angeordneten Bereichen und zweite Holzelemente mit zick-zack-förmig angeordneten Bereichen auf, wobei die ersten und zweiten zick-zack-förmig ausgebildeten Holzelemente gleich oder verschieden voneinander sein können. In einer Ausführungsform unterscheiden sich die ersten und die zweiten Holzelemente bezüglich ihrer Abmessungen oder der Art des verwendeten Holzes. Es ist bevorzugt, dass sich die Holzfasern in besagten ersten und zweiten Elementen in die gleiche Vorzugsrichtung erstrecken.

Im Allgemeinen liegen mehr als 50 % der Holzelemente in der Kernschicht so vor, dass sie fest miteinander verbunden, wobei ein zick-Bereich eines Elements mit einem angrenzenden zack-Bereich des Elements eine gemeinsame Kante zwischen sich ausbilden, und wobei Elemente in der Kernschicht so angeordnet sind, dass zwei derartige Kanten zweier verschiedener Elemente sich in einem Winkel überkreuzen, der verschieden von Null ist, wobei die zwei Elemente an der Überkreuzungsstelle fest miteinander verbunden sind. Die Holzelemente liegen in der Kernschicht vorzugsweise in einer regellosen Verteilung vor.

Vorzugsweise sind mehr als 60 %, oder mehr als 70 %, oder mehr als 80 %, oder mehr als 90 % oder sogar 100 % der Holzelemente in der Kernschicht so angeordnet bzw. regellos verteilt, dass sie fest miteinander verbunden sind. Vorzugsweise sind 100 % der Holzelemente so angeordnet bzw. regellos verteilt, dass sie fest miteinander verbunden sind. In dieser Ausführungsform weist die erfindungsgemäße Kernschicht eine höhere mechanische Stabilität im Vergleich zu einer Kernschicht auf, in welcher nicht alle Holzelemente miteinander fest verbunden sind.

Es ist möglich, dass sich in der erfindungsgemäßen Kernschicht auch andere Bereiche als die besagten Kanten der plättchenförmigen Holzelemente aufweisend zick-zack-förmige Bereiche einander überkreuzen. Beispielsweise können zick-Bereiche mit zick-Bereichen anderer Holzelemente so überkreuzen, dass sich nicht die Kanten sondern Flächen der Bereiche überkreuzen oder überlappen, oder besagte Kanten können mit Flächen der zick-Bereiche überkreuzen oder überlappen.

In einer Ausführungsform weist die Kernschicht zusätzlich zu den zick-zack-förmig ausgebildeten Holzelementen ebene Elemente auf. Der Begriff "eben" schließt Begriffe wie "*ebenflächig*" oder "*eben ausgeformt oder ausgebildet*" oder "*ebenflächig ausgebildet oder ausgeformt*" ein. Diese ebenen Elemente können ausgewählt werden aus: Holz, Papier, Metall, Kunststoff, und zwei oder mehr davon. Diese ebenen Elemente können mit besagten Kanten der plättchenförmigen Holzelemente, welche zick-zack-förmig angeordnete Bereiche aufweisen, verklebt werden. Wenn ein Bereich besagter zick-zack-förmig ausgebildeter Holzelemente mit besagten ebenen Elementen verklebt wird, kann der innere Zusammenhalt der Kernschicht weiter verbessert werden.

In einer Ausführungsform sind die zick-zack-förmig ausgebildeten Holzelemente aus Furnier hergestellt oder aus Oriented Strand Board (OSB)-Chips. In einer Ausführungsform wird das Furnier in Form eines Blattes oder in Form von Streifen bereitgestellt. In einer Ausführungsform werden die OSB-Chips in Form von Flocken zur Verfügung gestellt, welche längliche und schmale Stränge aufweisen.

In einer Ausführungsform können für die Herstellung der erfindungsgemäßen Kernschicht zick-zack-förmige Holzelemente eingesetzt werden, welche nicht verleimt sind, d.h. unverleimt sind. Der Begriff "*nicht verleimt*" bedeutet, dass das Holzelement nicht aus zusammengeleimtem Holz oder zusammengeleimten Hölzern oder zusammengeleimten Holzabfällen oder aus verleimten Fasern, Strands oder Spänen zusammengesetzt ist oder besteht. Damit besteht das zick-zack-förmige Holzelement ausschließlich aus Holz. Somit weist das Holzelement im Inneren des Holzelements keinen Kleber oder Leim auf, der üblicherweise in der Holzindustrie zum Verkleben von Holz verwendet wird. Bekannte derartige Kleber basieren auf Glutin, Kasein, Harnstoff-Formaldehyd, Phenol-Formaldehyd, Resorcin-Formaldehyd, Polyvinylacetat, und/oder Polyurethan. Die Verwendung von nicht verleimten zick-zack-förmigen Holzelementen ist auch aus Umwelt- und Kostengründen vorteilhaft.

Der Begriff "*nicht verleimtes Holzelement*" schließt selbstverständlich nicht aus, dass zwei derartige zick-zack-förmige Holzelemente in der erfindungsgemäßen Kernschicht an besagter Überkreuzungsstelle durch Leim oder einen Kleber fest miteinander verbunden sind. Hierzu ist es in einer Ausführungsform möglich, dass bei der Herstellung der Kernschicht nur die Kanten der Berge oder Täler der zick-zack-förmigen Holzelemente mit Leim versehen werden. In einer weiteren Ausführungsform kann bei der Herstellung der Kernschicht jedoch die gesamte Oberfläche des Holzelements mit Leim versehen werden, beispielsweise durch die bekannte Trommelbeleimung durch Besprühen des Holzelements mit Leim.

In einer weiteren Ausführungsform können für die Herstellung der erfindungsgemäßen Kernschicht zick-zack-förmige Holzelemente verwendet werden, welche aus zusammengeleimtem Holz oder zusammengeleimten Hölzern oder zusammengeleimten Holzabfällen oder aus verleimten Fasern, Strands oder Spänen zusammengesetzt sind. Damit bestehen derartige Holzelemente aus Holz und Leim. Sie weisen insbesondere im Innern des Holzelements diesen Leim auf.

In einer weiteren bevorzugten Ausführungsform werden für die erfindungsgemäße Kernschicht zick-zack-förmige Holzelemente eingesetzt, die bei der Herstellung einer Wärme- oder Hitzebehandlung unterzogen wurden. Vorzugsweise werden derartige Holzelemente nach einem Verfahren hergestellt, welches zumindest die folgenden Stufen (H1) bis (H4) aufweist:
(H1) Bereitstellen eines ebenflächigen oder nicht ebenflächigen Holzelements, welches Fasern sowie auf oder zwischen den Fasern Lignin aufweist, vorzugsweise wobei das Holzelement ein unverleimtes Holzelement ist;
(H2) Erhitzen des Holzelements der Stufe (H1) auf eine Temperatur, welche ausreicht, zumindest einen Teil des Lignins zu erweichen oder zu schmelzen;
(H3) Verformen des in Stufe (H2) erhitzten Holzelements derart, dass ein zick-zackförmiges Holzelement gebildet wird;
(H4) Abkühlen des in Stufe (H3) verformten Holzelements bzw. gebildeten zick-zack-förmigen Holzelements auf eine Temperatur unterhalb der Erweichungstemperatur oder Schmelztemperatur des Lignins.

Das hergestellte zick-zack-förmige Holzelement ist vorzugsweise ein wellenförmig ausgebildetes Holzelement mit einer oder mehreren der Anordnungen (a) bis (d). Derartige Holzelemente besitzen eine ausgezeichnete Tragfähigkeit, so dass sie als oder für eine aufgelockerte Kernschicht bzw. in Mehrschichtverbunden mit aufgelockerter Kernschicht verwendet werden können, die ihrerseits bei relativ geringer Dichte eine hohe Tragfähigkeit erlauben.

In einer Ausführungsform betrifft die Erfindung somit auch die Verwendung zick-zackförmiger Holzelemente in einer Kernschicht, wobei die Holzelemente nach einem Verfahren hergestellt werden, welches zumindest die Stufen (H1) bis (H4) aufweist:
(H1) Bereitstellen eines ebenflächigen oder nicht ebenflächigen Holzelements, welches Fasern sowie auf oder zwischen den Fasern Lignin aufweist;
(H2) Erhitzen des Holzelements der Stufe (H1) auf eine Temperatur, welche ausreicht, zumindest einen Teil des Lignins zu erweichen oder zu schmelzen; vorzugsweise beträgt die Temperatur mindestens 80 °C; besonders bevorzugt ist, dass die Temperatur im Bereich von 80 bis 400 °C liegt;
(H3) Verformen des in Stufe (H2) erhitzten Holzelements derart, dass ein zick-zackförmiges Holzelement gebildet wird;
(H4) Abkühlen des in Stufe (H3) verformten Holzelements;
wobei das Verformen in Stufe (H3) so durchgeführt wird, dass das Verhältnis der Wellenhöhe zur Dicke des zick-zack-förmigen Holzelements gleich oder größer als 2 : 1 ist;
wobei der Begriff "*Dicke*" den kürzesten Abstand zwischen einer Oberseite und der entsprechenden Unterseite des zick-zack-förmigen Holzelements bedeutet, und der Begriff "*Wellenhöhe*" den kürzesten Abstand zwischen zwei imaginären, zueinander parallelen Ebenen bedeutet, zwischen die das zick-zack-förmige Holzelement angeordnet werden kann, derart, dass die Wellen zwischen diesen Ebenen liegen;
und wobei vorzugsweise das Holzelement der Stufe (H1) aus unverleimten Holz oder unverleimten Holzfasern besteht, und somit auch das gebildete zick-zack-förmige Holzelement.

**Stufe (H1):** In Stufe (H1) wird ein ebenflächiges oder nicht ebenflächiges Holzelement bereitgestellt. Der Begriff "*ebenflächig*" bedeutet, dass alle Punkte oder Flächen des Holzelements in einer Ebene liegen. Der Begriff "*nicht ebenflächig*" bedeutet, dass nicht alle Punkte oder Flächen des Holzelements in einer Ebene liegen. Das nicht ebenflächige Holzelement kann demzufolge auch zumindest einen Bereich aufweisen, welcher ebenflächig ist. Der Begriff "*Bereich*" bedeutet ein bestimmtes Areal oder Gebiet des Holzelements. Dieses Holz weist vorzugsweise lange Fasern auf, wobei sich zwischen und auf den Fasern Lignin befindet. Vorzugsweise entspricht die Länge der Fasern der Länge des Holzelements.

In einer bevorzugten Ausführungsform wird in Stufe (H1) ein ebenflächiges oder nicht ebenflächiges Holzelement eingesetzt, welches nicht verleimt ist, d.h. unverleimt ist. Demgemäß wird in dieser Ausführungsform ein Holzelement in Stufe (H1) eingesetzt, vorzugsweise in Form eines Furniers, vorzugsweise Schälfurnier oder Messerfurnier. Es kann auch ein Holzelement eingesetzt werden, welches durch Sägen unverleimten Holzes hergestellt wird. In einer weiteren Ausführungsform ist es auch möglich, ein Holzelement einzusetzen, welches durch Zerspanen von Holz in bekannten Maschinen, beispielsweise Zerspanen von Rundholz in Messerringzerspanern erhalten wird. Ein durch Zerspanen von Rundholz in Messerringzerspanern hergestelltes Holzelement ist auch unter dem Begriff "*OSB-Span*" *oder* "*OSB Strand*" bekannt.

Ferner ist das Holzelement nicht auf eine bestimmte Holzart beschränkt. Es kann aus einer beliebigen Holzart hergestellt werden, beispielsweise aus einem Holz eines Laubbaums oder eines Nadelbaums. Ferner ist das Holzelement nicht auf eine bestimmte Rohstoffqualität oder / und Abmessung beschränkt. Dies bedeutet auch, dass für die Herstellung eines Mehrschichtverbund die Holzelemente nicht auf eine Bahnware mit relativ großen Abmessungen beschränkt sind, sondern vorzugsweise relativ "*kleine*" streubare Holzelemente eingesetzt werden, welche sich regellos anordnen lassen. Der Begriff "*klein*" wird nachstehend im Zusammenhang mit den Abmessungen des Holzelements definiert. Diese relativ kleinen Elemente tolerieren Fehler, da fehlerhafte Elemente, in denen beispielsweise die Wellung nicht ausgeprägt ist oder teilweise Elemente zerstört sind, ausgesiebt werden können, oder dem Mehrschichtverbund gezielt mit beigemischt werden können. Es können aber auch bahnförmige zick-zack-förmige Holzelemente zur Herstellung der erfindungsgemäßen Kernschicht eingesetzt werden.

Es können in Stufe (H1) auch Holzelemente eingesetzt werden, welche in unterschiedlichen Dimensionen und in unterschiedlichen Abmessungen vorliegen. Dies kann vorzugsweise dann notwendig sein, wenn OSB-Späne im Verfahren Verwendung finden sollen, da dort die Abmessungsvarianzen in einem relativ großen Bereich liegen. Es können auch Holzelemente aus Holzabfällen und / oder minderwertigen Rohholzqualitäten eingesetzt werden, vorausgesetzt, diese Holzabfälle sind unverleimt.

Vorzugsweise ist das zick-zack-förmige Holzelement einlagig. Der Begriff *"einlagig"* bedeutet, dass das in Stufe (H1) bereitgestellte Holzelement nur eine Schicht oder eine Lage Holz aufweist. Insbesondere bedeutet der Begriff "*einlagig*"*,* dass das Holzelement der Stufe (H1) nicht aus verschiedenen Lagen Holz besteht, die mittels eines Klebers oder Leims zusammengehalten werden.

Bekanntlich weisen die Fasern eines derartigen, d.h. nicht verleimten, Holzelements eine Vorzugsrichtung auf, sind also anisotrop ausgerichtet. Dies schließt jedoch nicht aus, dass sich die Faserrichtung aufgrund von Krummschäftigkeit, Drehwuchs oder Wimmerwuchs auch bereichsweise ändern kann. Dies bedeutet nicht, dass dies mit einer Drehung der Faserrichtung bis zu 90 ° verbunden ist, jedoch ist es durchaus möglich, dass sich die Faserrichtung bis zu 30 ° dreht. Somit schließt der Begriff "*Vorzugsrichtung*" ein, dass die Richtungen einzelner Fasern um bis zu 30 ° von der Vorzugsrichtung abweichen können.

Da die Faser des in Stufe (H1) eingesetzten Holzelements anisotrop ausgerichtet sind, also eine Vorzugsrichtung aufweisen, weisen die Fasern nach der Verformung in Stufe (H3) gleichfalls eine Vorzugsrichtung auf. Diese Vorzugsrichtung ist in Form einer Welle ausgeprägt. Somit weist die Welle in Wellenrichtung eine Vorzugsrichtung auf. Diese Vorzugsrichtung kann gleich oder unterschiedlich zu der des in Stufe (H1) bereitgestellten Holzelements sein. Vorzugsweise ist die Faserrichtung bzw. die Vorzugsrichtung gleich. Demzufolge weisen die Fasern der Holzelemente der Stufe (H1) und der Stufe (H4) jeweils eine Vorzugsrichtung auf, die gleich oder verschieden voneinander sein kann. Vorzugsweise ist die Vorzugsrichtung der Fasern der Stufe (H1) und der Stufe (H4) gleich.

**Stufe (H2):** Das Holzelement, welches in Stufe (H1) bereitgestellt und in Stufe (H2) eingesetzt wird, wird erhitzt. Das Erhitzen wird bei einer Temperatur durchgeführt, welche ausreicht, zumindest einen Teil des Lignins, welches sich auf und zwischen den Fasern des Holzelements befindet, zu erweichen oder zu schmelzen. Vorzugsweise wird in Stufe (H2) das Holzelement auf eine Temperatur von mindestens 80 °C erhitzt, insbesondere auf eine Temperatur im Bereich 80 bis 400 °C, weiter vorzugsweise im Bereich von 100 bis 380 °C, mehr bevorzugt im Bereich von 120 bis 360 °C und noch mehr bevorzugt im Bereich von 150 bis 350 °C.

In einer besonders bevorzugten Ausführungsform wird auf eine Temperatur im Bereich von 230 °C bis 400 °C erhitzt, weiter vorzugsweise auf eine Temperatur von 230 bis 380 °C, mehr bevorzugt 230 °C bis 350 °C. In einer weiteren besonders bevorzugten Ausführungsform wird auf eine Temperatur von 250 °C bis 400 °C erhitzt, weiter vorzugsweise auf eine Temperatur von 250 bis 380 °C, mehr bevorzugt 250 °C bis 350 °C.

Werden relativ hohe Temperaturen in Stufe (H2) verwendet, sollte die Erhitzungsdauer nicht zu lange sein, um Beschädigungen, etwa durch Verschmoren oder Anbrennen, zu vermeiden. Umgekehrt kann bei relativ niedrigen Temperaturen eine längere Erhitzungsdauer notwendig sein. Vorzugsweise liegt die Erhitzungsdauer im Bereich von 0,005 bis 50 s, weiter bevorzugt im Bereich von 0,005 bis 10 s, mehr bevorzugt im Bereich von 0,005 bis 5 s, noch mehr bevorzugt im Bereich von 0,01 bis 2 s.

Das Erhitzen kann mittels einer geeigneten Vorrichtung und eines geeigneten Wärmeträgers erfolgen. Vorzugsweise werden elektrisch beheizte Vorrichtungen eingesetzt.

Das Erhitzen mittels heißer Luft oder heißen Wasserdampfs ist gleichfalls möglich. Mit heißem Wasserdampf ist erfahrungsgemäß ein Erhitzen bis auf maximal 200 °C möglich. Mit elektrisch beheizten Vorrichtungen können auch höhere Temperaturen erreicht werden, vorzugsweise eine Temperatur im Bereich von 230 °C bis 400 °C.

in einer Ausführungsform erfolgt das Erhitzen in Stufe (H2) ohne Zufuhr von Wasser oder Wasserdampf.

Ohne an eine Theorie gebunden zu sein wird angenommen, dass durch das Erhitzen das auf und zwischen den Fasern des Holzelements der Stufe (H1) befindliche Lignin, also holzeigenes Lignin, zumindest teilweise erweicht oder schmilzt. Das zumindest teilweise erweichte oder geschmolzene Lignin kann dann durch Diffusion zumindest teilweise an und auf die Oberfläche des verformten Holzelements gelangen. Beim Abkühlen gemäß Stufe (H4) wird dieses Lignin verfestigt. Dabei wird das nach dem Verfahren hergestellte zick-zack-förmige Holzelement zumindest teilweise mit Lignin beschichtet. Dieser Effekt lässt sich gut visuell mit dem unbewaffneten Auge beobachten, da die Oberfläche des zick-zack-förmigen Holzelements im Allgemeinen einen höheren Glanz aufweist als die Oberfläche des in Stufe (H1) bereitgestellten Holzelements.

Es wird ferner angenommen, dass diese Ligninschicht daran beteiligt ist, dass das zick-zack-förmige Holzelement eine Festigkeit aufweist, die derjenigen der aus dem Stand der Technik bekannten nicht ebenflächigen Holzelemente deutlich überlegen ist.

Außerdem wird die nachfolgende Verformung der Stufe (H3) so durchgeführt, dass möglichst wenig Fasern auch in den Extrempunkten der Welle brechen oder beschädigt werden, da darunter die Stabilität des zick-zack-förmigen Holzelements eingeschränkt würde. Faserbruch wird sich jedoch nicht vollständig ausschließen lassen, da unterschiedliche Holzarten auf Grund von beispielsweise unterschiedlicher Dichte oder Qualität auch unterschiedlich auf die Verformung der Stufe (H3) reagieren können.

In einer Ausführungsform kann vor Stufe (H2) dem Holzelement der Stufe (H1) zusätzliches Lignin zugeführt werden, also holzfremdes Lignin. Bei Temperatureinwirkung gemäß Stufe (H2) erweicht auch dieses Lignin zumindest teilweise oder schmilzt teilweise, wobei das hergestellte zick-zack-förmige Holzelement zusätzlich zumindest teilweise mit Lignin beschichtet wird. Dieses zugesetzte Lignin kann somit dem resultierenden zick-zack-förmigen Holzelement eine zusätzliche Festigkeit vermitteln.

Der Begriff "*holzeigen*" bedeutet somit, dass das Lignin aus dem Holz des Holzelements der Stufe (H1) stammt, aus dem das zick-zack-förmige Holzelement hergestellt wurde. Der Begriff "*holzfremd*" bedeutet, dass das Lignin nicht aus dem Holz stammt, aus dem das zick-zack-förmige Holzelement hergestellt wurde. Somit ist das zick-zack-förmige Holzelement zusätzlich mit Lignin beschichtet, welches nicht holzeigen ist.

**Stufe (H3):** Das in Stufe (H2) erhitzte Holzelement wird in Stufe (H3) verformt. Dieses Verformen wird derart durchgeführt, dass ein Holzelement in Form eines zick-zack-förmigen Holzelements entsteht. Der Begriff "*zick-zack-förmig*" wird synonym zum Begriff *"wellenförmig"* sowie synonym zum Begriff "*wellenförmig ausgebildet*" verwendet. Dabei weisen die zick-zack-förmigen oder wellenförmigen Holzelemente eine oder mehrere der Anordnungen (a) bis (d) auf, nämlich
(a) die plättchenförmigen Bereiche der Holzelemente sind plane Flächen und die zwischen den planen Flächen ausgebildete Kante ist eine plane Fläche;
(b) die plättchenförmigen Bereiche der Holzelemente sind gekrümmt ausgebildete Flächen und die zwischen den gekrümmten Flächen ausgebildete Kante ist eine gekrümmt ausgebildete Fläche;
(c) die plättchenförmigen Bereiche der Holzelemente sind gekrümmt ausgebildete Flächen und die zwischen den gekrümmten Flächen ausgebildete Kante ist geradenförmig;
(d) die plättchenförmigen Bereiche der Holzelemente sind gekrümmt ausgebildete Flächen und die zwischen den gekrümmten Flächen ausgebildete Kante ist eine plan ausgebildete Fläche;

Der Begriff "*wellenförmig*" bedeutet eine Welle, die mindestens einen Wellenberg (Wellenkamm) oder ein Wellental oder einen Wellenberg und ein Wellental aufweist.

Vorzugsweise erfolgt das Verformen in Stufe (H3) mittels eines profilierten Werkzeugs. Der Begriff *"profiliertes Werkzeug"* bedeutet, dass sich im Werkzeug oder auf dem Werkzeug Abrundungen und / oder Einkehlungen befinden. Diese Abrundungen und / oder Einkehlungen bewirken die Verformung, wenn das ebenflächige Holzelement dem profilierten Werkzeug ausgesetzt wird. Das ebenflächige Holzelement kann dabei ohne Ausüben von Druck wie auch unter Druck verformt werden. Geeignete profilierte Werkzeuge sind aus dem Stand der Technik bekannt, beispielsweise aus der DE 42 01 201 oder der WO 2009/067344, oder können analog zu diesem Stand der Technik angefertigt werden. Diese profilierten Werkzeuge können den zur Herstellung des zick-zack-förmigen Holzelements mit einer oder mehreren der Anordnungen (a), (b), (c) oder (d) erforderlichen Gegebenheiten angepasst werden, derart, dass vorzugsweise die Wellenhöhe zur Dicke im erzeugten Holzelements größer als 2 : 1 ist. Vorzugsweise werden diese profilierten Werkzeuge zusätzlich beheizt, nämlich dann, wenn die Stufen (H2) und (H3) gleichzeitig ausgeführt werden sollen.

In einer bevorzugten Ausführungsform wird das in Stufe (H2) erhitzte Holzelement in Stufe (H3) zumindest einem Profilwalzenpaar ausgesetzt.

In einer bevorzugten Ausführungsform weist das Verformen der Stufe (H3) die Stufe (H3.1) auf:
(H3.1) Leiten des in Stufe (H2) erhitzten Holzelements der Stufe (H1) zwischen zumindest ein Profilwalzenpaar, dessen Walzen gegenläufig rotieren.

Vorzugsweise ist mindestens eine der Walzen des zumindest einen Profilwalzenpaars beheizt, weiter vorzugsweise elektrisch beheizt. Somit können die Stufen (H2) und (H3) gleichzeitig ausgeführt werden.

In einer Ausführungsform können auch mehrere hintereinandergeschaltete Profilwalzenpaare eingesetzt werden.

Vorzugsweise ist das zumindest eine Profilwalzenpaar der Stufe (H3.1) oder ein anderes zur Verformung befähigtes Profilwerkzeug so ausgestaltet, dass das Holzelement mit einer oder mehreren der Anordnungen (a), (b), (c) oder (d) zick-zack-förmig ausgebildet wird. Es weist dann mindestens einen Wellenberg (Wellenkamm) oder ein Wellental oder einen Wellenberg und ein Wellental auf.

In den Anordnungen (a) und (d) wird die Verformung so durchgeführt, dass das Holzelement einen mindestens teilweise ebenflächigen Bereich aufweist. In den Ausführungsformen (b) und (c) wird die Verformung so durchgeführt, dass das Holzelement keinen teilweise ebenflächigen Bereich aufweist

In einer Ausführungsform weist das zick-zack-förmige Holzelement mindestens 4 Wellenberge und Wellentäler auf, also vier vollständige Wellen.

Wird in Stufe (H2) ein Holzelement eingesetzt, dessen Fasern eine Vorzugsrichtung aufweisen, wird die Verformung in Stufe (H3) vorzugsweise so durchgeführt, dass die Verformung nicht parallel zur Richtung der Fasern des Holzelements erfolgt. Somit verläuft auch die Richtung der Fasern nicht parallel zu einem bei der Verformung gebildeten Wellental oder Wellenberg des zick-zack-förmigen Holzelements.

Der Begriff "*parallel zu einem Wellental oder Wellenberg"* bedeutet hierbei parallel zu einer imaginären Linie, die sich auf dem Wellenberg (Wellenkamm) oder Wellental befindet, und die den kürzesten Abstand zwischen den seitlichen Begrenzungen des Wellentals oder Wellenbergs darstellt.

Somit wird die Verformung quer zur Faserrichtung bzw. der Vorzugsrichtung der Fasern durchgeführt.

In einer bevorzugten Ausführungsform wird die Verformung in Stufe (H3) so durchgeführt, dass diese senkrecht zur Richtung der Fasern im Holzelement der Stufe (H1) erfolgt. Somit verläuft die Richtung der Fasern senkrecht zu einem bei der Verformung gebildeten Wellental oder Wellenberg im zick-zack-förmigen Holzelement.

Der Begriff *"senkrecht zu einem Wellental oder Wellenberg"* bedeutet hierbei senkrecht zu einer imaginären Linie, die sich auf dem Wellenberg (Wellenkamm) oder Wellental des zick-zack-förmigen Holzelements befindet, und die den kürzesten Abstand zwischen den seitlichen Begrenzungen des Wellentals oder Wellenbergs darstellt. Der Begriff "*senkrecht zu einem Wellental oder Wellenberg*" bedeutet auch, dass eine Abweichung in einem Winkel von etwa bis zu 30 ° möglich ist.

In einer bevorzugten Ausführungsform wird die Verformung in Stufe (H3) so durchgeführt, dass die Längsrichtung senkrecht zu einem Wellental oder Wellenberg verläuft.

Durch die bevorzugte Verformung quer zu der Vorzugsrichtung der Fasern wird die Festigkeit des nach dem Verfahren hergestellten Holz-elements (B) weiter verbessert. Verläuft nämlich die Verformung der Stufe (H3) parallel zu der Vorzugsrichtung der Fasern kann dies die Folge haben, dass das Verformen zu einer Beschädigung, etwa zum Flachdrücken des Elements, oder gar zu einem Bruch des Holzelements führen kann. Dies kann auch dann eintreten, wenn derartig verformte Holzelemente durch ein Gewicht belastet werden. Derartige Beschädigungen können nicht oder nur in einem untergeordneten Maß eintreten, wenn das Verformen quer zur Faserrichtung oder senkrecht zur Faserrichtung erfolgt. Somit wird die Stabilität eines derartigen Holzelements verbessert, da Beschädigungen parallel zur Faserrichtung nicht oder nur zu einem untergeordneten Maß eintreten können.

Die Stufen (H2) und (H3) können nacheinander oder auch gleichzeitig ausgeführt werden. In einer bevorzugten Ausführungsform werden die Stufen (H2) und (H3) gleichzeitig ausgeführt.

Das Verformen in Stufe (H3) wird vorzugsweise so durchgeführt wird, dass das Verhältnis der Wellenhöhe zur Dicke des wellenförmigen Holzelements (B) größer als 2 : 1 ist.

Der Begriff "*Wellenhöhe*" bedeutet die Summe der Auslenkung zwischen einem Wellenberg und einem Wellental von einer imaginären Grundlinie aus, die zwischen Wellenberg und Wellental verläuft. Dies bedeutet auch, dass die Wellenhöhe als der kürzeste Abstand zwischen zwei imaginären, zueinander parallelen Ebenen definiert werden kann, zwischen die das zick-zack-förmige Holzelement angeordnet werden kann, derart, dass die Wellen zwischen diesen Ebenen liegen.

Der Begriff "*Dicke*" bedeutet den kürzesten Abstand zwischen einer Oberseite und der entsprechenden Unterseite des zick-zack-förmigen Holzelements.

In einer Ausführungsform liegt das Verhältnis der Wellenhöhe zur Dicke im Bereich gleich oder von größer 2,0 : 1 bis 70 : 1 oder von gleich oder größer 2,0 : 1 bis 60 : 1 oder von gleich oder größer 2,0 : 1 bis 50 : 1 oder von gleich oder größer 2,0 : 1 bis 40 : 1 oder von gleich oder größer 2,0 : 1 bis 30 : 1. In einer bevorzugten Ausführungsform liegt das Verhältnis von Wellenhöhe zur Dicke im Bereich von gleich oder größer 2,0 : 1 bis 15 : 1, mehr bevorzugt 3 : 1 bis 10 : 1, noch mehr bevorzugt 4 : 1 bis 8 : 1 oder 5 : 1 bis 6 : 1.

Vorzugsweise unterscheidet sich die Dicke des Holzelements (B) im Bereich des Wellenbergs und im Bereich des Wellentals nicht um mehr als 20 % und, sofern das Holzelement einen teilweise ebenflächigen Bereich aufweist, weist der ebenflächige Bereich dann eine Dicke im Bereich der Dicke des Wellenbergs und/oder Wellentals auf.

**Stufe (H4):** Vorzugsweise wird in Stufe (H4) das in Stufe (H3) verformte Holzelement abgekühlt, vorzugsweise auf eine Temperatur, bei der das Lignin ganz oder zumindest teilweise erstarrt oder verfestigt ist. Dabei wird das zick-zack-förmige Holzelement erhalten und liegt in physischer Form vor. Vorzugsweise wird auf Umgebungstemperatur abgekühlt, vorzugsweise auf eine Temperatur im Bereich von 0 bis 40 °C, weiter bevorzugt 10 bis 30 °C. Die Abkühlung kann mittels Umgebungsluft und / oder mittels eines Gebläses erfolgen, also durch direktes Anblasen des in Stufe (H3) erzeugten Holzelements, vorzugsweise durch Anblasen mit Luft. Das hergestellte zick-zack-förmige Holzelement kann dann vorzugsweise gelagert und danach einer Verwendung zugeführt werden.

Das nach dem Verfahren hergestellte zick-zack-förmige Holzelement ist bezüglich seiner Länge und Breite nicht begrenzt. Vorzugsweise wird in Stufe (H1) ein Holzelement in das Verfahren eingesetzt, das so dimensioniert ist, dass das Verhältnis von Länge zur Breite im zick-zack-förmigen Holzelement im Bereich von 2 : 1 bis 50 : 1 liegt, weiter bevorzugt im Bereich von 2 : 1 bis 40 : 1. In einer Ausführungsform liegt das Produkt aus Länge x Breite im Bereich von 10 mm x 5 mm bis 3000 mm x 1000 mm.

Vorzugsweise werden relativ große zick-zack-förmige Holzelemente, die vorzugsweise bahnförmig ausgestaltet sind, einem Zerkleinerungsschritt unterzogen. Dies wird weiter unten näher erläutert.

Relativ kleine zick-zack-förmige Holzelemente weisen vorzugsweise ein Produkt aus Länge x Breite im Bereich von 10 x 5 mm bis 200 x100 mm auf, weiter bevorzugt 10 x 5 mm bis 100 x 50 mm, weiter bevorzugt 10 x 5 mm bis 50 x25 mm. Der Begriff "*Länge"* bedeutet den kürzesten Abstand zwischen Anfang und Ende des zick-zack-förmigen Holzelements in Längsrichtung des Holzelements, vorzugsweise gemessen in Faserrichtung. Der Begriff "*Breite*" bedeutet den Abstand zwischen den Seitenrändern quer zur Längsrichtung des zick-zack-förmigen Holzelements, vorzugsweise gemessen quer zur Faserrichtung.

Vorzugsweise wird in Stufe (H1) ein Holzelement in das Verfahren eingesetzt, das so dimensioniert ist, dass das nach dem Verfahren erhaltene zick-zack-förmige Holzelement eine Dicke im Bereich von 0,1 bis 5 mm, vorzugsweise 0,2 mm bis 3,5 mm, weiter bevorzugt 0,2 mm bis 2 mm aufweist.

Vorzugsweise wird die Verformung in Stufe (H3) so durchgeführt, also das Profil des profilierten Werkzeugs so gewählt, dass die Wellenhöhe des zick-zack-förmigen Holzelements im Bereich von 1 bis 20 mm liegt, vorzugsweise 2 bis 12 mm, mehr bevorzugt 2 bis 8 mm.

In einer bevorzugten Ausführungsform liegt die Dicke des zick-zack-förmigen Holzelements im Bereich von 0,1 bis 5 mm und die Wellenhöhe liegt im Bereich von 1 bis 20 mm, wobei das Verhältnis der Wellenhöhe zur Dicke des wellenförmigen Holzelements (B) größer als 2 : 1 ist.

In einer besonders bevorzugten Ausführungsform liegt die Dicke des zick-zack-förmigen Holzelements im Bereich von 0,2 bis 3,5 mm und die Wellenhöhe liegt im Bereich von 2 bis 12 mm, wobei das Verhältnis der Dicke zur Wellenhöhe des zick-zack-förmigen Holzelements größer als 2 : 1 ist. In einer weiteren besonders bevorzugten Ausführungsform liegt die Dicke des zick-zack-förmigen Holzelements im Bereich von 0,2 bis 2 mm und die Wellenhöhe liegt im Bereich von 2 bis 8 mm, wobei das Verhältnis der Wellenhöhe zur Dicke des zick-zack-förmigen Holzelements größer als 2 : 1 ist.

Die nach dem Verfahren hergestellten zick-zack-förmigen Holzelemente weisen vorzugsweise eine Schüttdichte im Bereich von 40 bis 125 kg/m³ auf, mehr bevorzugt im Bereich von 45 bis 100 kg/m³, noch mehr bevorzugt im Bereich von 50 bis 80 kg/m³.

In einer weiteren Ausführungsform können auch zick-zack-förmige Holzelemente mit einer höheren Schüttdichte verwendet werden, etwa einer Schüttdichte bis zu 250 kg/m³.

In einer Ausführungsform kann vor der Durchführung der Stufe (H2) das Holzelement (A) oder das Holz, aus welchem das Holzelement (A) hergestellt wird, einer Behandlung mit Wasser unterzogen werden und somit ein feuchtes Holzelement in Stufe (H1) eingesetzt werden. Der Begriff "*feucht*" bedeutet hierbei einen Wassergehalt von 30 % bis 150 % gemessen nach DIN 52182. Die Verwendung von Holzelementen in Stufe (H1) mit niedrigerem Wassergehalt ist gleichfalls möglich, vorzugsweise mit einem Wassergehalt von 5 bis 30 %.

In einer weiteren Ausführungsform kann das Verfahren einen Trocknungsschritt aufweisen. Vorzugsweise wird dieser Trocknungsschritt vor Stufe (H4) durchgeführt, vorzugsweise im Anschluss an die Verformung gemäß Stufe (H3). In dieser Ausführungsform ist das Verfahren dann dadurch gekennzeichnet, dass Stufe (H3) mindestens die Stufe (H3.2) aufweist:
(H3.2) Trocknen des in Stufe (H3) erhaltenen verformten Holzelements.

In einer weiteren Ausführungsform ist es möglich, durch eine mechanische Bearbeitung die Festigkeit des hergestellten zick-zack-förmigen Holzelements weiter zu verbessern. Vorzugsweise kann durch mechanische Einwirkung ein Wellenberg oder ein Wellental verformt werden, derart, dass im Wellenberg oder Wellenberg eine Vertiefung entsteht. Vorzugsweise wird diese Verformung, die zusätzlich zur Verformung der Stufe (H3) durchgeführt wird, nach Stufe (H3) oder gleichzeitig mit Stufe (H3) ausgeführt. Demzufolge kann Stufe (H3) auch die Stufe (H3.3) aufweisen:
(H3.3) Verformen eines Wellentals oder eines Wellenbergs einer Welle des wellenförmigen Holzelements derart, dass im Wellental und / oder im Wellenberg zumindest teilweise eine Vertiefung entsteht.

Vorzugsweise ist die Vertiefung ein Falz.

Ferner ist es auch möglich, das in einer der Stufen (H3) oder (H4) erhaltene Holzelement einer weiteren Verformung zu unterwerfen.

In einer weiteren Ausführungsform kann das nach Abkühlen erhaltene zick-zack-förmige Holzelement der Stufe (H4) zerkleinert werden. Demzufolge kann nach Stufe (H4) das Verfahren auch die Stufe (H5) aufweisen:
(H5) Zerkleinern des in Stufe (H4) erhaltenen Holzelements.

In einer weiteren Ausführungsform kann das in Stufe (H4) oder (H5) erhaltene zick-zack-förmige Holzelement auch einem Siebschritt (H6) unterworfen werden. Diese Vorgehensweise kann dann bevorzugt sein, wenn Holzelemente auf eine bestimmte Größenverteilung eingestellt oder Holzelemente von störendem Abfall befreit werden sollen. Demzufolge kann das Verfahren auch die Stufe (H6) aufweisen:
(H6) Sieben des in Stufe (H4) oder Stufe (H5) erhaltenen Holzelements.

In einer Ausführungsform betrifft die Erfindung auch die Verwendung eines zick-zack-förmigen Holzelement, dessen Oberfläche zumindest teilweise mit Lignin "*beschichtet*" ist, welches nach einem Verfahren herstellbar ist, welches zumindest die Stufen (H1) bis (H3) aufweist, in der erfindungsgemäßen Kernschicht. Der Begriff "*beschichtet*" bedeutet, dass sich erstarrtes oder verfestigtes Lignin zumindest auf einem Teil der Oberfläche des Holzelements befindet oder dass zumindest ein Teil der Oberfläche des Holzelements Lignin aufweist. Der Begriff *"zumindest ein Teil der Oberfläche weist Lignin auf oder ist mit Lignin beschichtet*" bedeutet, dass zumindest 10 % der Oberfläche des Holzelements, mehr bevorzugt mehr als 20 % oder mehr als 30 % oder mehr als 40 % oder mehr als 50 % oder mehr als 60 % oder mehr als 70 % oder mehr als 80 % oder mehr als 90 % oder die gesamte Oberfläche mit Lignin beschichtet ist.

In einer weiteren Ausführungsform betrifft die Erfindung die Verwendung eines zick-zack-förmigen Holzelements, dessen Oberfläche zumindest teilweise mit Lignin beschichtet ist, in der erfindungsgemäßen Kernschicht, wobei das Verhältnis der Wellenhöhe zur Dicke des zick-zack-förmigen Holzelements gleich oder größer als 2 : 1 ist; wobei der Begriff "*Dicke*" den kürzesten Abstand zwischen einer Oberseite und der entsprechenden Unterseite des zick-zack-förmigen Holzelements bedeutet, und der Begriff "*Wellenhöhe"* den kürzesten Abstand zwischen zwei imaginären, zueinander parallelen Ebenen bedeutet, zwischen die das zick-zack-förmige Holzelement angeordnet werden kann, derart, dass die Wellen zwischen diesen Ebenen liegen; und wobei das Holzelement der Stufe (H1) aus unverleimten Holz oder unverleimten Holzfasern besteht.

### Zweiter Aspekt der Erfindung

### Verfahren zur Herstellung einer Kernschicht aufweisend zick-zack-förmig ausgebildete Elemente aus Holz

Gemäß eines ***zweiten Aspekts*** betrifft die Erfindung ein Verfahren zur Herstellung einer Kernschicht aufweisend plättchenförmige Elemente aus Holz, welche Bereiche aufweisen, die zick-zack-förmig angeordnet sind, wobei ein zick-förmiger Bereich eines Elements mit einem angrenzenden zack-förmigen Bereich des Elements eine gemeinsame Kante zwischen sich ausbilden, derart, dass das Element zick-zack-förmig ausgebildet oder ausgeformt ist. Die Elemente sind in der Kernschicht so angeordnet sind, dass zwei derartige Kanten zweier Elemente, die gleich oder verschieden voneinander sein können, sich in einem Winkel überkreuzen, der verschieden von null ist.

In einer Ausführungsform weist das Verfahren mindestens die Stufen (i) und (ii) auf:
(i) Vorlegen plättchenförmiger Elemente aus Holz, welche Bereiche aufweisen, die zick-zack-förmig angeordnet sind, wobei ein zick-förmiger Bereich eines Elements mit einem angrenzenden zack-förmigen Bereich des Elements eine gemeinsame Kante zwischen sich ausbilden;
(ii) Anordnen der Elemente aus Stufe (i) derart, dass zwei derartige Kanten zweier Elemente sich in einem Winkel überkreuzen, der verschieden von Null ist;
(iii) Festes Verbinden der Kanten aus Stufe (ii).

Vorzugsweise erfolgt das feste Verbinden mittels eines Klebers oder Leims.

In einer weiteren Ausführungsform werden an der Überkreuzungsstelle der Kanten die zwei Elemente, die gleich oder verschieden voneinander sein können, fest miteinander verbunden durch ebene Elemente ausgewählt aus: Holz, Papier, Metall, Kunststoff, und zwei oder mehr davon, wobei die ebenen Elemente mit den Kanten ihrerseits durch ein geeignetes Verbindungsmittel wie vorzugsweise einen Kleber oder Leim verbunden sind.

In einer Ausführungsform kann das Anordnen der Elemente in Stufe (ii) durch ein Ausrichten der Holzelemente bewerkstelligt werden, die entweder durch Hand oder maschinell erfolgen kann.

Das feste Verbinden in der Stufe (iii) kann durch Anlegen von Druck erleichtert werden, der vorzugsweise in einem Bereich von 0,02 MPa bis 1,5 MPa liegt, mehr bevorzugt in einem Bereich von 0,01 bis 1,0 MPa.

Jeder der Schritte (i) bis (iii) kann in Anwesenheit einer Deckschicht durchgeführt werden. Vorzugsweise wird das Verfahren dann so durchgeführt, dass die mit einem Kleber versehenen Holzelemente auf der Deckschicht gemäß Stufe (i) vorgelegt und auf dieser gemäß Stufe (ii) ausgerichtet werden.

Vorzugsweise wird dann diese Anordnung von einer weiteren Deckschicht abgedeckt und verpresst. Dabei entsteht ein Mehrschichtverbund aufweisend zwei Deckschichten und eine dazwischen befindliche Kernschicht.

Vorzugsweise ist die Kernschicht gemäß des ***ersten Aspekts*** oder hergestellt nach dem Verfahren des *zweiten Aspekts* ebenflächig.

### Dritter Aspekt der Erfindung

### Mehrschichtverbund mindestens aufweisend eine Deckschicht und eine Kernschicht

Ein ***dritter Aspekt*** der Erfindung betrifft einen Mehrschichtverbund mindestens aufweisend eine Deckschicht und eine erfindungsgemäße Kernschicht, wobei die Deckschicht so angeordnet ist, dass sie die Kernschicht zumindest teilweise bedeckt und mit dieser in fester Verbindung steht, wobei die Kernschicht eine erfindungsgemäße Kernschicht gemäß des ***ersten Aspekts*** der Erfindung und der darin beschriebenen Ausführungsformen ist, oder eine Kernschicht ist hergestellt gemäß des ***zweiten Aspekts*** und der darin beschriebenen Ausführungsformen.

Die in den erfindungsgemäßen Mehrschichtverbunden verwendete Deckschicht kann ein Material aufweisen ausgewählt aus der Gruppe: Furnier, Holzplatte, Spanplatte, Faserplatte, Sperrholzplatte, Kunststoffplatte, Gipskarton, Blech, Faserzementplatte, und aus zwei oder mehreren davon.

Vorzugsweise ist die mindestens eine Deckschicht eben, d.h. ebenflächig.

Vorzugsweise weist die mindestens eine Deckschicht eine quadratische oder rechteckige Form auf.

Die Abmessungen der Deckschicht sind nicht limitiert. Vorzugsweise liegen die Breite und die Länge der mindestens einen Deckschicht jeweils im Bereich von 0,50 m bis 5 m, weiter bevorzugt im Bereich von 1 bis 3 m.

Ein Verfahren zur Herstellung eines erfindungsgemäßen Mehrschichtverbunds wurde bereits oben im Zusammenhang mit der Herstellung der Kernschicht beschrieben. Das Verfahren weist dann mindestens die Stufen (i) bis (iii) auf:
(i) Vorlegen plättchenförmiger Elemente aus Holz, welche Bereiche aufweisen, die zick-zack-förmig angeordnet sind, wobei ein zick-förmiger Bereich eines Elements mit einem angrenzenden zack-förmigen Bereich des Elements eine gemeinsame Kante zwischen sich ausbilden;
(ii) Anordnen der Elemente aus Stufe (i) derart, dass zwei derartige Kanten zweier Elemente sich in einem Winkel überkreuzen, der verschieden von Null ist;
(iii) Festes Verbinden der Kanten der Elemente aus Stufe (ii);
wobei in Stufe (ii) das Anordnen auf einer Deckschicht erfolgt, und in Stufe (iii) die Elemente auch mit der Deckschicht fest verbunden werden, vorzugsweise mittels eines Klebers.

Falls gewünscht, kann dann die Seite der Kernschicht, welche noch keine Deckschicht aufweist, mit einer Deckschicht versehen werden, vorzugsweise durch Verkleben mit der Deckschicht.

### Vierter Aspekt der Erfindung

### Druckverformte Kernschicht und druckverformter Mehrschichtverbund

Ein ***vierter Aspekt*** der Erfindung betrifft eine Kernschicht und einen Mehrschichtverbund enthaltend die Kernschicht, welche nicht ebenflächig sind.

In einer Ausführungsform können die erfindungsgemäße Kernschicht gemäß des *ersten Aspekts* oder hergestellt nach dem Verfahren des ***zweiten Aspekts*** und der erfindungsgemäße Mehrschichtverbund gemäß des ***dritten Aspekts*** einem Schritt der Druckverformung unterworfen werden, wobei dreidimensionale Objekte hergestellt werden können. Dazu kann die erfindungsgemäße Kernschicht oder der erfindungsgemäße Mehrschichtverbund in einem geeigneten Presswerkzeug verformt werden. Diese Verformung kann während der Herstellung der Kernschicht oder des Mehrschichtverbunds wie auch im Anschluss daran erfolgen.

In einer Ausführungsform werden lediglich die Kanten der Kernschicht oder des Mehrschichtverbunds verformt, vorzugsweise durch Komprimieren. Damit ist es möglich, die Hohlräume an den Kanten der Kernschicht oder des Mehrschichtverbunds abzudichten. Dieses Druckverformen kann durchgeführt werden während des Zusammenfügens der Kernschichten oder des Mehrschichtverbunds, jedoch auch im Anschluss an das Zusammenfügen der Kernschichten oder des Mehrschichtverbunds in einer nachgeschalteten Stufe, beispielsweise durch thermisches Erweichen des Klebers an den Kanten. Diese Ausführungsform hat den Vorteil, dass ein Versiegeln der Kanten beispielsweise durch Aufbringen eines Holzstreifens, vorzugsweise eines Furnierstreifens, weggelassen werden kann.

Beim Komprimieren ergibt sich die Möglichkeit, den Randteil der Kernschicht oder des Mehrschichtverbunds mit einem balligen Profil, also einem gerundeten Profil, zu versehen. Dies ist z.B. bei hochwertigen Möbelbauteilen häufig wünschenswert.

In einer weiteren Ausführungsform können nicht nur der Kantenbereich sondern zusätzlich oder getrennt vom Kantenbereich auch weitere Bereiche der Kernschicht oder des Mehrschichtverbunds druckverformt werden.

Ein Verfahren zur Herstellung dreidimensionaler Holzgegenstände durch Druckverformung wird in der DD 271870 und der DE 101 24 912 beschrieben.

Demgemäß betrifft die Erfindung in einem ***vierten Aspekt*** einen Mehrschichtverbund, mindestens aufweisend eine Deckschicht und eine Kernschicht, wobei die Deckschicht so angeordnet ist, dass sie die Kernschicht zumindest teilweise überdeckt und mit dieser in fester Verbindung steht, wobei die Kernschicht eine Kernschicht gemäß des ***ersten Aspekts*** der Erfindung und der darin beschriebenen Ausführungsformen ist; oder eine Kernschicht ist hergestellt nach einem Verfahren gemäß des ***zweiten Aspekts*** der Erfindung und der darin beschriebenen Ausführungsformen ist; oder der Mehrschichtverbund ein Mehrschichtverbund gemäß des ***dritten Aspekts*** der Erfindung und der darin beschriebenen Ausführungsformen ist; herstellbar nach einem Verfahren, welches zumindest die Stufe (i) aufweist:
(i) Druckverformen des Mehrschichtverbunds gemäß des ***dritten Aspekts.***

In gleicher Weise ist es auch möglich, lediglich die erfindungsgemäße Kernschicht gemäß des ***ersten Aspekts*** der Erfindung und der darin beschriebenen Ausführungsformen, oder die erfindungsgemäße Kernschicht hergestellt gemäß des ***zweiten Aspekts*** der Erfindung und der darin beschriebenen Ausführungsformen, unter Druck zu verformen.

Demgemäß betrifft die Erfindung auch eine Kernschicht, welche für einen Mehrschichtverbund geeignet ist, der mindestens eine Deckschicht und eine Kernschicht aufweist, wobei die Deckschicht so angeordnet ist, dass sie die Kernschicht zumindest teilweise bedeckt und mit dieser in fester Verbindung steht, wobei die Kernschicht Elemente aus Holz aufweist, welche plättchenförmige Bereiche aufweisen, die zick-zack-förmig angeordnet sind, wobei ein zick-Bereich eines Elements mit einem angrenzenden zack-Bereich des Elements eine gemeinsame Kante zwischen sich ausbilden, derart, dass das Element zick-zack-förmig ausgebildet ist, und wobei Elemente in der Kernschicht so angeordnet sind, dass zwei derartige Kanten zweier Elemente sich in einem Winkel überkreuzen, der verschieden von Null ist, wobei die zwei Elemente an der Überkreuzungsstelle fest miteinander verbunden sind; herstellbar nach einem Verfahren, welches zumindest die Stufe (i) aufweist:
(i) Druckverformen der Kernschicht gemäß des ***ersten Aspekts*** der Erfindung und der darin beschriebenen Ausführungsformen; oder Druckverformen einer Kernschicht hergestellt nach einem Verfahren gemäß des ***zweiten Aspekts*** der Erfindung und der darin beschriebenen Ausführungsformen.

### Fünfter Aspekt der Erfindung

### Verwendung der erfindungsgemäßen Kernschicht und des erfindungsgemäßen Mehrschichtverbundes

Gemäß eines ***fünften Aspekts*** betrifft die Erfindung ferner die Verwendung des erfindungsgemäßen Mehrschichtverbunds oder der erfindungsgemäßen Kernschicht.

Vorzugsweise kann der erfindungsgemäße Mehrschichtverbund oder die erfindungsgemäße Kernschicht in Anwendungen eingesetzt werden, welche eine hohe mechanische Beanspruchung bei relativ niedrigem Gewicht ermöglicht, und/oder welche ein hohes Dämpfungsvermögen erfordern. In einer Ausführungsform wird der Mehrschichtverbund oder die Kernschicht bei der Möbelherstellung verwendet, für Regale, für Verpackungen für den Transport, bei Innenausbauten, in Türen und Toren, in oder als Stühle, sowie im Fahrzeug- und Schiffsbau. Dazu kann der Mehrschichtverbund bzw. die Kernschicht durch Schneiden, Sägen, Feilen und/oder Bohren nach bekannten Verfahren bearbeitet werden.

Die erfindungsgemäße Kernschicht und ein Mehrschichtverbund, welcher die erfindungsgemäße Kernschicht aufweist, beispielsweise eine Leichtbauplatte, weisen eine hohe Druck- und Beanspruchungsfestigkeit auf. Diesbezüglich sind die erfindungsgemäße Kernschicht und der daraus hergestellte erfindungsgemäße Mehrschichtverbund den entsprechenden Kernschichten bzw. Mehrschichtverbunden überlegen, die aus industriellem Abfall aus Spänen und Faserplatten hergestellt werden. Zusätzlich können Dimensionsänderungen in der Kernschicht bzw. dem Mehrschichtverbund unter dem Einfluss von Feuchtigkeit, insbesondere Dimensionsänderungen in Richtung der Dicke der Kernschicht oder des Mehrschichtverbunds, vernachlässigbar sein aufgrund der vernachlässigbaren Dimensionsänderungen der Holzelemente in Faserrichtung. Dies gilt insbesondere dann, wenn die Faserrichtung in Richtung der mindestens zwei aneinander grenzenden plättchenförmigen Bereiche und senkrecht zu den Kanten verläuft, welche von den aneinander grenzenden Bereichen gebildet werden Dies ist ein weiterer Vorteil gegenüber anderen bekannten Kernschichten und daraus hergestellte Mehrschichtverbunden, wie sie zum Beispiel hergestellt werden aus flachen Teilchen oder aus Schichten, die mit parallelen Fasern hergestellt werden, beispielsweise wie Sperrholz oder Faserplatten.

Ohne an eine Theorie gebunden zu sein wird angenommen, dass die angesprochenen Vorteile aus der Struktur der in der Kernschicht und dem Mehrschichtverbund verwendeten zick-zack-förmig ausgebildeten Holzelemente resultieren, wobei die besagte Kante nicht parallel zur Faserrichtung des Holzelementes verläuft, sondern vorzugsweise senkrecht dazu. Dann wird die Struktur des Holzelementes immer noch durch die Holzfasern unterstützt, insbesondere an besagter Kante. Im Gegensatz dazu, weisen Holzelemente, welche aus industriellem Abfall hergestellt werden, Fasern auf, die nicht die gleiche Vorzugsrichtung aufweisen, sondern sich isotrop in die drei Raumrichtungen erstrecken. Dann können die entsprechenden Kanten parallel zur Faserrichtung verlaufen. Daher wird die Struktur dieser Holzelemente nicht oder nur zu einem geringeren Ausmaß an besagter Kante unterstützt im Vergleich zu Holzelementen, wie sie in der Kernschicht und der daraus hergestellten Platte gemäß der Erfindung verwendet werden.

Zusätzlich finden Befestigungsmittel wie Nägel und Schrauben oder Möbelverbinder in der erfindungsgemäßen Kernschicht und dem erfindungsgemäßen Mehrschichtverbundes einen zuverlässigen Halt, da die Struktur der Kernschicht bei vergleichsweise geringer Dichte lediglich kleine Hohlräume aufweist, also eine hohe Homogenität besitzt. Damit kann auch eine stabile Befestigung an einem Träger, beispielsweise an einer Wand, erreicht werden.

Ausführungsbeispiele der Erfindung sind in den Zeichnungen schematisch dargestellt. Sie werden im Folgenden mit Bezug zu den Figuren der Zeichnungen näher erläutert.

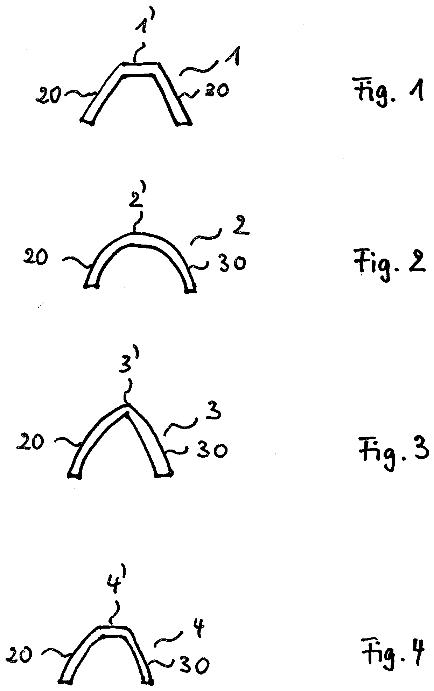

- **Fig. 1**: zeigt einen Längsschnitt einer Ausführungsform eines Holzelements 1 eines erfindungsgemäßen Mehrschichtverbunds, vorzugsweise einer Leichtbauplatte. Das Holzelement weist eine Kante in Form einer planen Fläche 1' sowie einen zick-Bereich 20 und einen zack-Bereich 30 auf, wobei diese Bereiche plane Flächen sind.
- **Fig. 2**: zeigt einen Längsschnitt einer Ausführungsform eines Holzelements 2 eines erfindungsgemäßen Mehrschichtverbunds, vorzugsweise einer Leichtbauplatte. Das Holzelement weist eine Kante in Form einer konvexen Fläche 2' sowie einen zick-Bereich 20 und einen zack-Bereich 30 auf, die jeweils gekrümmte Flächen sind.
- **Fig. 3**: zeigt einen Längsschnitt einer Ausführungsform eines Holzelements 3 eines erfindungsgemäßen Mehrschichtverbunds, vorzugsweise einer Leichtbauplatte. Das Holzelement weist eine geradlinige Kante 3' sowie einen zick-Bereich 20 und einen zack-Bereich 30 auf, die jeweils gekrümmte Flächen sind.
- **Fig. 4**: zeigt einen Längsschnitt einer Ausführungsform eines Holzelements 4 eines erfindungsgemäßen Mehrschichtverbunds, vorzugsweise einer Leichtbauplatte. Das Holzelement weist eine Kante in Form einer planen Fläche 4' sowie eine zick-Bereich 20 und einen zack-Bereich 30 auf, die jeweils gekrümmte Flächen sind.

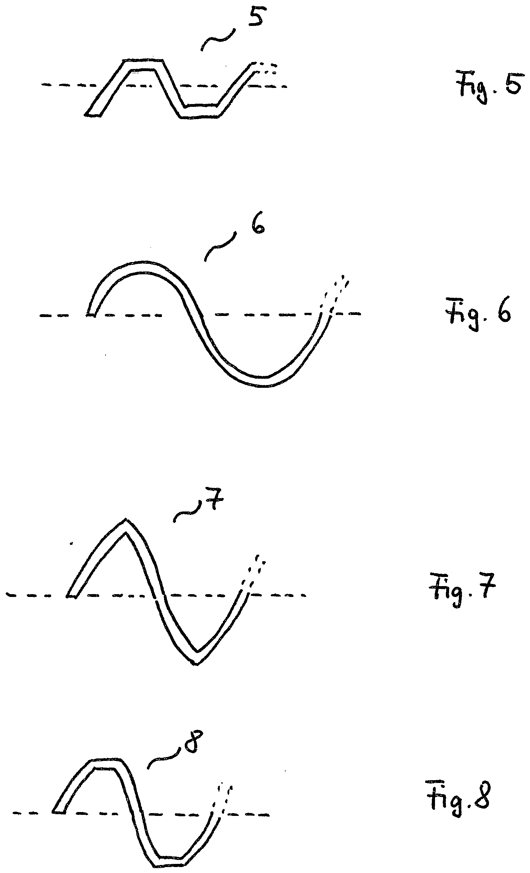

- **Fig. 5**: zeigt einen Längsschnitt einer Ausführungsform eines Holzelements 5 eines erfindungsgemäßen Mehrschichtverbunds, vorzugsweise einer Leichtbauplatte. Das Holzelement weist sich wiederholende Einheiten des Holzelements 1 der **Fig. 1** auf und ist somit wellenförmig ausgebildet. Die Welle weist mindestens eine positive wie auch mindestens eine negative Halbwelle auf (bezüglich der gedanklichen gestrichelten Linie).
- **Fig. 6**: zeigt einen Längsschnitt einer Ausführungsform eines Holzelements 6 eines erfindungsgemäßen Mehrschichtverbunds, vorzugsweise einer Leichtbauplatte. Das Holzelement weist sich wiederholende Einheiten des Holzelements 2 der **Fig. 2** auf und ist somit wellenförmig ausgebildet. Die Welle weist mindestens eine positive wie auch mindestens eine negative Halbwelle auf (bezüglich der gedanklichen gestrichelten Linie). Die Welle kann als Sinus-förmige Welle charakterisiert werden
- **Fig. 7**: zeigt einen Längsschnitt einer Ausführungsform eines Holzelements 7 eines erfindungsgemäßen Mehrschichtverbunds, vorzugsweise einer Leichtbauplatte. Das Holzelement weist sich wiederholende Einheiten des Holzelements 3 der **Fig. 3** auf und ist somit wellenförmig ausgebildet. Die Welle weist mindestens eine positive wie auch mindestens eine negative Halbwelle auf (bezüglich der gedanklichen gestrichelten Linie).
- **Fig. 8**: zeigt einen Längsschnitt einer Ausführungsform eines Holzelements 8 eines erfindungsgemäßen Mehrschichtverbunds, vorzugsweise einer Leichtbauplatte. Das Holzelement weist sich wiederholende Einheiten des Holzelements 4 der **Fig. 4** auf und ist somit wellenförmig ausgebildet. Die Welle weist mindestens eine positive wie auch mindestens eine negative Halbwelle auf (bezüglich der gedanklichen gestrichelten Linie).

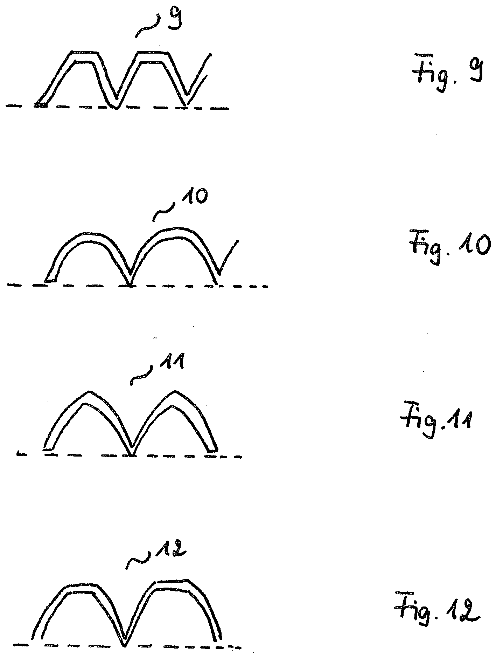

- **Fig. 9**: zeigt einen Längsschnitt einer Ausführungsform eines Holzelements 9 eines erfindungsgemäßen Mehrschichtverbunds, vorzugsweise einer Leichtbauplatte. Das Holzelement weist sich wiederholende Einheiten des Holzelements 1 der **Fig. 1** auf. Die Welle weist mindestens zwei positive Halbwellen auf, aber keine negative Halbwelle (bezüglich der gedanklichen gestrichelten Linie).
- **Fig. 10**: zeigt einen Längsschnitt einer Ausführungsform eines Holzelements 10 eines erfindungsgemäßen Mehrschichtverbunds, vorzugsweise einer Leichtbauplatte. Das Holzelement weist sich wiederholende Einheiten des Holzelements 2 der **Fig. 2** auf und ist somit wellenförmig ausgebildet. Die Welle weist mindestens zwei positive Halbwellen auf, aber keine negative Halbwelle (bezüglich der gedanklichen gestrichelten Linie).
- **Fig. 11**: zeigt einen Längsschnitt einer Ausführungsform eines Holzelements 11 eines erfindungsgemäßen Mehrschichtverbunds, vorzugsweise einer Leichtbauplatte. Das Holzelement weist sich wiederholende Einheiten des Holzelements 3 der **Fig. 3** auf und ist somit wellenförmig ausgebildet. Die Welle weist mindestens zwei positive Halbwellen auf, aber keine negative Halbwelle (bezüglich der gedanklichen gestrichelten Linie).
- **Fig. 12**: zeigt einen Längsschnitt einer Ausführungsform eines Holzelements 12 eines erfindungsgemäßen Mehrschichtverbunds, vorzugsweise einer Leichtbauplatte. Das Holzelement weist sich wiederholende Einheiten des Holzelements 4 der **Fig. 4** auf und ist somit wellenförmig ausgebildet. Die Welle weist mindestens zwei positive Halbwellen auf, aber keine negative Halbwelle (bezüglich der gedanklichen gestrichelten Linie).

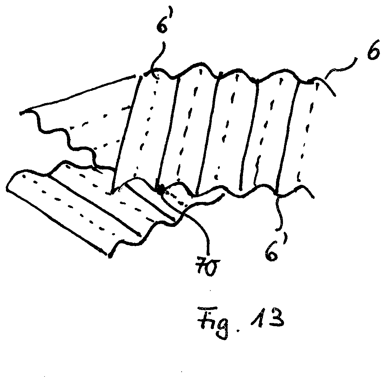

- **Fig. 13**: zeigt eine Anordnung von wellenförmig ausgebildeten Holzelementen 6 in der erfindungsgemäßen Kernschicht einer weiteren bevorzugten Ausführungsform eines erfindungsgemäßen Mehrschichtverbunds. Die Anordnung der Holzelemente 6 ist regellos. Daher ist die Kontaktfläche 70 zwischen aneinandergrenzenden Holzelementen jeweils ein Punkt 70. Beim Anordnen und anschließenden Verkleben haben die Holzelemente in der Regel punktartige Verbindungsstellen 70 an den sich in verschiedenen Winkeln überkreuzenden Kanten 6'. Diese Verbindungsstellen pressen sich während der mäßigen Verdichtung wiederum durch Stauchen teilweise ineinander und ermöglichen so eine Vergleichmäßigung der Struktur. Je nach Verdichtungsgrad verbleibt ein hoher bis mittlerer Hohlraumanteil. Dies führt zu einer Kernschicht mit niedriger resultierenden Dichte, da eine Ausrichtung der Holzelemente 6 entlang ihrer diesbezüglichen Vorzugsrichtungen im Wesentlichen nicht eintritt. Als Ergebnis ist die Kernschicht mehr anisotrop, was eine anisotrope mechanische Charakterisierung der resultierenden Platte impliziert. Die entstandene Struktur stellt ein regelloses Fachwerk dar, dessen Fachwerkstäbe aus parallelfasrigem, hochtragfähigem Holz bestehen. Die gestauchten, gelenkigen Stabverbindungen sind, wie bei Fachwerken allgemein bekannt, keine Schwachstellen, da ein Fachwerk Gelenke zulässt. Voraussetzung ist eine ausreichende Verklebung der Verbindungsstellen, um Längskräfte aufnehmen zu können.

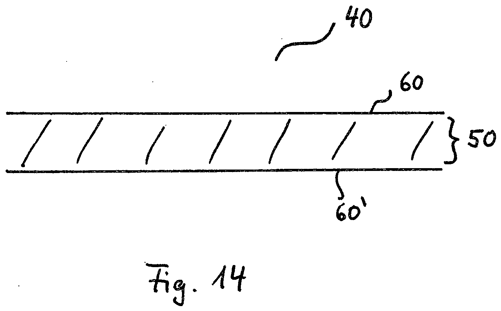

- **Fig. 14**: zeigt eine Anordnung von wellenförmig ausgebildeten Holzelementen der **Fig. 13** in der erfindungsgemäßen Kernschicht 50 einer weiteren bevorzugten Ausführungsform eines erfindungsgemäßen Mehrschichtverbunds 40. Die Kernschicht 50 befindet sich zwischen den Deckschichten 60, 60', welche gleich oder verschieden voneinander sein können, und ist mit diesen verklebt.

Neben der aus der Fachwerkstruktur resultierenden hohen Druck- und Schubfestigkeit und -steifigkeit des fertigen Leichtbauelementes ist die sehr geringe Dickenquellung der Leichtbauplatte bei Feuchtigkeitsänderungen, bedingt durch die praktisch zu vernachlässigende Quellung des Holzes längs zur Faserrichtung, zu betonen. Damit wäre eine solche Platte allen anderen, aus flachliegenden Partikeln oder parallelfasrigen Schichten aufgebauten Holzwerkstoffen wie Span- und Faserplatten, Sperrholz oder Tischlerplatten überlegen.

In einer Ausführungsform können die zick-zack-förmig ausgebildeten Holzelemente mit beigemischten ebenflächigen, d.h. ebenflächig ausgebildeten, Elementen kombiniert werden. Vorzugsweise werden dabei die zick-zack-förmig ausgebildeten Holzelemente mit den ebenflächigen Elementen verklebt. Dabei entstehen beim Verkleben anteilig linienförmige Verbindungsstellen zwischen den zick-zack-förmig ausgebildeten Elementen und den ebenflächigen Elementen und damit eine erhöhte Querzugfestigkeit der Leichtbauplatte.

Zick-zack-förmig ausgebildete Holzelemente, mit oder auch ohne ebenflächige Holzelemente kombiniert, können zur Bildung eines Leichtbaukernes auch mit üblichen Holzwerkstoffelementen wie Holzspänen oder Holzfasern gemischt werden. Dieses beleimte Gemisch kann zu einer leichten Holzwerkstoffplatte verpresst werden, die eine weiter erhöhte Homogenität aufweist. Besonders vorteilhaft ist dabei die Anwendbarkeit bestehender Technologien z.B. der Spanplattenherstellung, wobei Platten mit einer sehr viel geringeren Rohdichte als bei der üblichen Plattenherstellung möglich sind.

### Bezugszeichenliste:

- 1, 2, 3, 4: Holzelemente
- 5, 6, 7, 8, 9, 10, 11, 12: wellenförmige Holzelemente
- 1', 2', 3', 4', 6': Kanten
- 20, 30: zick - und zack-Bereiche
- 70: Verbindungsstelle zweier Kanten
- 40: Mehrschichtverbund
- 50: Kernschicht
- 60, 60': Deckschichten

## Patentansprüche

1. Kernschicht (50), wobei die Kernschicht (50) zick-zack-förmig ausgebildete Elemente aus Holz (1, 2, 3, 4, 5, 6, 7, 8, 9, 10, 11, 12) aufweist, welche plättchenförmige Bereiche (20, 30) aufweisen, die zick-zack-förmig angeordnet sind, wobei ein zick-Bereich eines Elements (1, 2, 3, 4, 5, 6, 7, 8, 9, 10, 11, 12) mit einem angrenzenden zack-Bereich des zick-zack-förmig ausgebildeten Elements (1, 2, 3, 4, 5, 6, 7, 8, 9, 10, 11, 12) eine gemeinsame Kante (1', 2', 3', 4', 6') zwischen sich ausbilden, und wobei zick-zack-förmig ausgebildete Elemente (1, 2, 3, 4, 5, 6, 7, 8, 9, 10, 11, 12) in der Kernschicht (50) so angeordnet sind, dass zwei derartige Kanten (1', 2', 3', 4', 6') zweier zick-zack-förmig ausgebildeter Elemente (1, 2, 3, 4, 5, 6, 7, 8, 9, 10, 11, 12), die gleich oder verschieden voneinander sein können, sich in einem Winkel überkreuzen, der verschieden von Null ist, wobei die zwei Elemente (1, 2, 3, 4, 5, 6, 7, 8, 9, 10, 11, 12) an der Überkreuzungsstelle (70) fest miteinander verbunden sind, wobei die Holzelemente (1, 2, 3, 4, 5, 6, 7, 8, 9, 10, 11, 12) in der Kernschicht (50) eine oder mehrere der nachfolgenden Anordnungen (a) bis (d) aufweisen:
(a) die plättchenförmigen Bereiche (20, 30) der Holzelemente (1, 5) sind plane Flächen und die zwischen den planen Flächen ausgebildete Kante ist eine plane Fläche (1');
(b) die plättchenförmigen Bereiche (20, 30) der Holzelemente (2, 6) sind gekrümmt ausgebildete Flächen und die zwischen den gekrümmten Flächen ausgebildete Kante ist eine gekrümmt ausgebildete Fläche (2');
(c) die plättchenförmigen Bereiche (20, 30) der Holzelemente (3, 7) sind gekrümmt ausgebildete Flächen und die zwischen den gekrümmten Flächen ausgebildete Kante ist geradenförmig (3');
(d) die plättchenförmigen Bereiche (20, 30) der Holzelemente (4, 8) sind gekrümmt ausgebildete Flächen und die zwischen den gekrümmten Flächen ausgebildete Kante ist eine plan ausgebildete Fläche (4');
und wobei
(α) die Elemente aus Holz (1, 2, 3, 4, 5, 6, 7, 8, 9, 10, 11, 12) in der Kernschicht (50) in einer regellosen Verteilung vorliegen; oder
(β) die Elemente aus Holz in der Kernschicht regellos nebeneinander und übereinander angeordnet sind; oder
(γ) die Elemente aus Holz in der Kernschicht regellos angeordnet sind, und die Kanten sich in verschiedenen Winkeln überkreuzen;
**dadurch gekennzeichnet, dass** die zick-zack-förmig ausgebildeten Holzelemente (1, 2, 3, 4, 5, 6, 7, 8, 9, 10, 11, 12) Fasern mit einer Vorzugsrichtung aufweisen, wobei die gemeinsame Kante (1', 2', 3', 4', 6') oder die gemeinsamen Kanten (1', 2', 3', 4', 6') nicht parallel zur Vorzugsrichtung verläuft oder verlaufen; oder
wobei die gemeinsame Kante (1', 2', 3', 4', 6') oder die gemeinsamen Kanten (1', 2', 3', 4', 6') senkrecht zur Vorzugsrichtung verläuft oder verlaufen.

2. Kernschicht (50) nach Anspruch 1, wobei zick-zack-förmig ausgebildete Holzelemente (1, 2, 3, 4, 5, 6, 7, 8, 9, 10, 11, 12) sich wiederholende Einheiten aus zick- und zack-Bereichen (20, 30) aufweisen, derart, dass die Holzelemente (1, 2, 3, 4, 5, 6, 7, 8, 9, 10, 11, 12) die Form einer Welle aufweisen, vorzugsweise wobei die zwischen den Bereichen ausgebildeten gemeinsamen Kanten (1', 2', 3', 4', 6') parallel zueinander verlaufen.

3. Kernschicht (50) nach Anspruch 2, wobei die Welle des zick-zack-förmigen Holzelements (9, 10, 11, 12) mindestens eine positive wie auch eine negative Halbwelle aufweist; oder

4. Kernschicht (50) nach Anspruch 2, wobei die Welle des zick-zack-förmigen Holzelements (9, 10, 11, 12) mindestens zwei positive Halbwellen aufweist, aber keine negativen Halbwellen.

5. Kernschicht (50) nach einem der Ansprüche 2 oder 3, wobei die Welle gebildet wird von
(a') Holzelementen (a) (5), derart, dass die Welle im Längsschnitt gesehen sich wiederholende Einheiten in Form eines Trapezes aufweist; oder
(b') Holzelementen (b) (6), derart, dass die Welle im Längsschnitt gesehen sich wiederholende Einheiten in Form einer Sinus-Funktion aufweist.

6. Kernschicht (50) nach einem der vorstehenden Ansprüche, wobei die Länge der Fasern eines zick-zack-förmig ausgebildeten Holzelements (1, 2, 3, 4, 5, 6, 7, 8, 9, 10, 11, 12) mindestens zweimal so lang ist wie die Dicke eines zick- oder zack-Bereichs oder des zick-zack-förmigen Holzelements (1, 2, 3, 4, 5, 6, 7, 8, 9, 10, 11, 12).

7. Kernschicht (50) nach einem der vorstehenden Ansprüche, wobei die Dicke eines zick- oder zack-Bereichs (20, 30) im Bereich von 0,2 mm bis 2 mm liegt und/oder die Höhe H eines zick-zack-förmig ausgebildeten Elements (1, 2, 3, 4, 5, 6, 7, 8, 9, 10, 11, 12) im Bereich von 0,8 mm bis 8 mm liegt und/oder die Länge L einer Kante (1', 2', 3', 4', 6') im Bereich von 0,5 cm bis 10 cm liegt; oder
wobei die Höhe (H) eines zick- oder zack-Bereichs (20, 30) höchstens einem Zehntel der Dicke der Kernschicht (50) beträgt.

8. Kernschicht (50) nach einem der vorstehenden Ansprüche, wobei jedes zick-zack-förmig ausgebildete Holzelement (1, 2, 3, 4, 5, 6, 7, 8, 9, 10, 11, 12)mit einem ebenflächigen Element verklebt ist, derart, dass das zick-zack-förmig ausgebildete Element (1, 2, 3, 4, 5, 6, 7, 8, 9, 10, 11, 12)und das ebenflächige Element einen oder mehrere Hohlräume zwischen sich ausbilden.

9. Kernschicht (50) nach einem der Ansprüche 1 bis 8, wobei die Kernschicht (50) mindestens ein zick-zack-förmig ausgebildetes Holzelement (1, 2, 3, 4, 5, 6, 7, 8, 9, 10, 11, 12)aufweist, welches mit einem ebenflächigen Element verklebt ist, derart, dass das zick-zack-förmig ausgebildete Element (1, 2, 3, 4, 5, 6, 7, 8, 9, 10, 11, 12)und das ebenflächige Element einen oder mehrere Hohlräume zwischen sich ausbilden; oder
wobei die Kernschicht (50) mindestens ein zick-zack-förmig ausgebildetes Holzelement (1, 2, 3, 4, 5, 6, 7, 8, 9, 10, 11, 12) aufweist, welches mit zwei ebenflächigen Elementen verklebt ist, derart, dass das zick-zack-förmig ausgebildete Element (1, 2, 3, 4, 5, 6, 7, 8, 9, 10, 11, 12) und die ebenflächigen Elemente mehrere Hohlräumen zwischen sich ausbilden, wobei das zick-zack-förmig ausgebildete Holzelement (1, 2, 3, 4, 5, 6, 7, 8, 9, 10, 11, 12) von den ebenen Elementen Sandwich-artig umgeben ist; oder
wobei die Kernschicht (50) mindestens ein Element aufweist, welches zwei zick-zack-förmig ausgebildete Holzelemente (1, 2, 3, 4, 5, 6, 7, 8, 9, 10, 11, 12) aufweist, welche mit einem ebenflächigen Element verklebt sind, derart, dass die zick-zack-förmig ausgebildeten Elemente (1, 2, 3, 4, 5, 6, 7, 8, 9, 10, 11, 12) und das ebenflächige Element mehrere Hohlräume zwischen sich ausbilden, wobei das ebenflächige Element von den zwei zick-zack-förmig ausgebildeten Holzelementen Sandwich-artig umgeben ist.

10. Kernschicht (50) nach einem der vorstehenden Ansprüche, wobei die zick-zack-förmigen Holzelemente (1, 2, 3, 4, 5, 6, 7, 8, 9, 10, 11, 12) ausschließlich aus Holz bestehen; oder
Kernschicht (50) nach einem der vorstehenden Ansprüche, wobei die Oberfläche der zick-zack-förmigen Holzelemente (1, 2, 3, 4, 5, 6, 7, 8, 9, 10, 11, 12) zumindest teilweise mit Lignin beschichtet ist; oder
Kernschicht (50) nach einem der vorstehenden Ansprüche, wobei die zick-zack-förmigen Holzelemente (1, 2, 3, 4, 5, 6, 7, 8, 9, 10, 11, 12) ausschließlich aus Holz bestehen; und wobei die Oberfläche der zick-zack-förmigen Holzelemente (1, 2, 3, 4, 5, 6, 7, 8, 9, 10, 11, 12) zumindest teilweise mit Lignin beschichtet ist

11. Verfahren zur Herstellung einer Kernschicht (50) nach einem der vorstehenden Ansprüche, mindestens aufweisend die Stufen (i) bis (iii):
(i) Vorlegen von zick-zack-förmig ausgebildeten Elementen (1, 2, 3, 4, 5, 6, 7, 8, 9, 10, 11, 12) aus Holz, welche plättchenförmige Bereiche (20, 30) aufweisen, die zick-zack-förmig angeordnet sind, wobei ein zick-Bereich eines Elements (1, 2, 3, 4, 5, 6, 7, 8, 9, 10, 11, 12) mit einem angrenzenden zack-Bereich des Elements (1, 2, 3, 4, 5, 6, 7, 8, 9, 10, 11, 12) eine gemeinsame Kante (1', 2', 3', 4', 6') zwischen sich ausbilden;
(ii) Anordnen der Elemente (1, 2, 3, 4, 5, 6, 7, 8, 9, 10, 11, 12) aus Stufe (i), derart, dass zwei derartige Kanten (1', 2', 3', 4', 6') zweier Elemente (1, 2, 3, 4, 5, 6, 7, 8, 9, 10, 11, 12) sich in einem Winkel überkreuzen, der verschieden von Null ist;
(iii) Festes Verbinden der Kanten (1', 2', 3', 4', 6') aus Stufe (ii), vorzugsweise mittels eines Klebers.

12. Mehrschichtverbund (40), mindestens aufweisend eine Deckschicht (60, 60') und eine Kernschicht (50), wobei die Deckschicht (60, 60') so angeordnet ist, dass sie die Kernschicht (50) zumindest teilweise bedeckt und mit dieser in fester Verbindung steht, wobei die Kernschicht (50) eine Kernschicht (50) ist wie in einem der Ansprüche 1 bis 10 definiert.

13. Mehrschichtverbund (40) nach Anspruch 12, wobei die Deckschicht ein Material aufweist ausgewählt aus: Furnier, Holzplatte, Spanplatte, Faserplatte, Sperrholzplatte, Kunststoffplatte, Gipskarton, Blech, Faserzementplatte, und aus zwei oder mehr davon.

14. Verwendung einer Kernschicht (50) nach einem der Ansprüche 1 bis 10; oder Verwendung eines Mehrschichtverbunds nach einem der Ansprüche 12 bis 13; bei der Möbelherstellung, für Regale, für Verpackungen für den Transport, für Innenausbauten, in Türen und Toren, sowie im Fahrzeug- und Schiffsbau.

## Claims

1. Core layer (50), wherein the core layer (50) comprises wooden zigzag-shaped elements (1, 2, 3, 4, 5, 6, 7, 8, 9, 10, 11, 12) comprising zigzagging laminar regions (20, 30), wherein a zig region of an element (1, 2, 3, 4, 5, 6, 7, 8, 9, 10, 11, 12), together with an adjoining zag region of the zigzag-shaped element (1, 2, 3, 4, 5, 6, 7, 8, 9, 10, 11, 12), form between them a common edge (1', 2', 3', 4', 6'), and wherein zigzag-shaped elements (1, 2, 3, 4, 5, 6, 7, 8, 9, 10, 11, 12) are arranged in the core layer (50) such that two such edges (1', 2', 3', 4', 6') of two zigzag-shaped elements (1, 2, 3, 4, 5, 6, 7, 8, 9, 10, 11, 12), which can be the same or different from each other, intersect at an angle which is different from zero, the two elements (1, 2, 3, 4, 5, 6, 7, 8, 9, 10, 11, 12) being fixedly connected to each other at the point of intersection (70); wherein the wooden elements (1, 2, 3, 4, 5, 6, 7, 8, 9, 10, 11, 12) have in the core layer (50) one or more of the following arrangements (a) to (d):
(a) the laminar regions (20, 30) of the wooden elements (1, 5) are planar regions and the edge formed between the planar regions is a planar region (1');
(b) the laminar regions (20, 30) of the wooden elements (2, 6) are curved regions and the edge formed between the curved regions is a curved region (2');
(c) the laminar regions (20, 30) of the wooden elements (3, 7) are curved regions and the edge formed between the curved regions is a straight line (3');
(d) the laminar regions (20, 30) of the wooden elements (4, 8) are curved regions and the edge formed between the curved regions is a planar region (4');
and wherein
(α) the wooden elements (1, 2, 3, 4, 5, 6, 7, 8, 9, 10, 11, 12) are randomly distributed in the core layer (50); or
(β) the wooden elements are randomly arranged in the core layer (50) side by side and one above the other; or
(γ) the wooden elements are randomly arranged in the core layer (50), and the edges intersect at different angles;
**characterized in that**
said zigzag-shaped wooden elements (1, 2, 3, 4, 5, 6, 7, 8, 9, 10, 11, 12) comprise fibres having a preferred direction, wherein the common edge (1', 2', 3', 4', 6') or the common edges (1', 2', 3', 4', 6') runs or run non-parallel to the preferred direction; or
wherein the common edge (1', 2', 3', 4', 6') or the common edges (1', 2', 3', 4', 6') runs or run perpendicular to the preferred direction.

2. Core layer (50) according to Claim 1, wherein zigzag-shaped wooden elements (1, 2, 3, 4, 5, 6, 7, 8, 9, 10, 11, 12) comprise repeating units of zig and zag regions (20, 30), such that the wooden elements (1, 2, 3, 4, 5, 6, 7, 8, 9, 10, 11, 12) have the form of a wave, preferably wherein common edges (1', 2', 3', 4', 6') formed between the regions run parallel to one another.

3. Core layer (50) according to claim 2, wherein the wave of the zigzag-shaped wooden element (9, 10, 11, 12) has at least a positive as well as a negative half-wave.

4. Core layer (50) according to claim 2, wherein the wave of the zigzag-shaped wooden element (9, 10, 11, 12) has at least two positive half-waves but no negative half-waves.

5. Core layer (50) according to any one of Claims 2 or 3, wherein the wave is formed from
(a') wooden elements (a) (5) such that the wave has in a longitudinal cut repeating units in the form of a trapezoid; or
(b') wooden elements (b) (6) such that the wave has in a longitudinal cut repeating units in the form of a sinus function.

6. Core layer (50) according to any one of the preceding claims, wherein the length of the fibres of a zigzag-shaped wooden elements (1, 2, 3, 4, 5, 6, 7, 8, 9, 10, 11, 12) is at least twice as long as the thickness of a zig or zag region of the zigzag-shaped wooden element (1, 2, 3, 4, 5, 6, 7, 8, 9, 10, 11, 12).

7. Core layer (50) according to one of the preceding claims, wherein the thickness of a zig or zag region (20) or (30) lies in the range of from 0.2 mm to 2 mm, and/or the height H of a zigzag-shaped element (1, 2, 3, 4, 5, 6, 7, 8, 9, 10, 11, 12) lies in the range of from 0.8 mm to 8 mm, and/or the length L of an edge (1', 2', 3', 4', 6') lies in the range of from 0.5 cm to 10 cm; or
wherein the height (H) of a zig or zag region (20, 30) measures no more than one-tenth of the thickness of the core layer (50).

8. Core layer (50) according to one of the preceding claims, wherein each zigzag-shaped wooden element (1, 2, 3, 4, 5, 6, 7, 8, 9, 10, 11, 12) is bonded to a planar element such that the zigzag-shaped element (1, 2, 3, 4, 5, 6, 7, 8, 9, 10, 11, 12) and the planar element form between them one or more cavities.

9. Core layer (50) according to one of Claims 1 to 8, wherein the core layer (50) comprises at least one zigzag-shaped wooden element (1, 2, 3, 4, 5, 6, 7, 8, 9, 10, 11, 12), which is bonded to a planar element such that the zigzag-shaped element (1, 2, 3, 4, 5, 6, 7, 8, 9, 10, 11, 12) and the planar element form between them one or more cavities; or
wherein the core layer (50) comprises at least one zigzag-shaped wooden element (1, 2, 3, 4, 5, 6, 7, 8, 9, 10, 11, 12), which is bonded to two planar elements such that the zigzag-shaped element (1, 2, 3, 4, 5, 6, 7, 8, 9, 10, 11, 12) and the planar elements form between them a plurality of cavities, wherein the zigzag-shaped wood element (1, 2, 3, 4, 5, 6, 7, 8, 9, 10, 11, 12) is surrounded in a sandwich-like manner by the plane elements; or
wherein the core layer (50) comprises at least one element comprising two zigzag-shaped wood elements (1, 2, 3, 4, 5, 6, 7, 8, 9, 10, 11, 12), which are bonded to a planar element such that the zigzag-shaped elements (1, 2, 3, 4, 5, 6, 7, 8, 9, 10, 11, 12) and the planar element form between them a plurality of cavities, wherein the planar element is surrounded in a sandwich-like manner by the two zigzag-shaped wood elements (1, 2, 3, 4, 5, 6, 7, 8, 9, 10, 11, 12).

10. Core layer (50) according to any one of the preceding claims, wherein said zigzag-shaped wood elements (1, 2, 3, 4, 5, 6, 7, 8, 9, 10, 11, 12) exclusively consist of wood; or
core layer (50) according to any one of the preceding claims, wherein the surface of said zigzag-shaped wooden elements (1, 2, 3, 4, 5, 6, 7, 8, 9, 10, 11, 12) is at least partially coated with lignin; or
core layer (50) according to any one of the preceding claims, wherein said zigzag-shaped wooden elements (1, 2, 3, 4, 5, 6, 7, 8, 9, 10, 11, 12) exclusively consist of wood; and wherein the surface of said zigzag-shaped wooden elements (1, 2, 3, 4, 5, 6, 7, 8, 9, 10, 11, 12) is at least partially coated with lignin;

11. Method for producing a core layer (50) according to one of the preceding claims, at least comprising the steps (i) to (iii):
(i) presenting zigzag-shaped wooden elements (1, 2, 3, 4, 5, 6, 7, 8, 9, 10, 11, 12), which comprise zigzagging laminar regions (20, 30), wherein a zig region of an element (1, 2, 3, 4, 5, 6, 7, 8, 9, 10, 11, 12), together with an adjoining zag region (60) of the element (1, 2, 3, 4, 5, 6, 7, 8, 9, 10, 11, 12), form between them a common edge (1', 2', 3', 4', 6');
(ii) arranging the elements (1, 2, 3, 4, 5, 6, 7, 8, 9, 10, 11, 12) from step (i) such that two such edges (1', 2', 3', 4', 6') of two elements (1, 2, 3, 4, 5, 6, 7, 8, 9, 10, 11, 12) intersect at an angle which is different from zero;
(iii) fixedly connecting of the edges (1', 2', 3', 4', 6') from step (ii), preferably by means of an adhesive.

12. Multilayer composite (40), at least comprising a cover layer (60, 60') and a core layer (50), wherein the cover layer (60, 60') is arranged such that it least partially covers the core layer (50) and is fixedly connected thereto, wherein the core layer (50) is a core layer (50) as defined in any one of claims 1 to 10.

13. Multilayer composite (40) according to claim 12, wherein the cover layer comprises a material selected from: veneer, woodboard, chipboard, fibreboard, plywood board, plastics sheet, plasterboard, sheet metal, fibre cement board, and from two or more thereof.

14. Use of a core layer (50) according to any one of claims 1 to 10; or use of a multilayer composite according to any one of claims 12 to 13; in furniture production, for shelving, for packagings for transport, for interior fittings, in doors and gates, as well as in vehicle construction and shipbuilding.

## Revendications

1. Couche centrale (50), dans laquelle la couche centrale (50) comprend des éléments en bois (1, 2, 3, 4, 5, 6, 7, 8, 9, 10, 11, 12) en forme de zigzag comprenant des zones en forme de plaquette (20, 30) agencées en zigzag, dans laquelle une zone de première partie du zigzag d'un élément (1, 2, 3, 4, 5, 6, 7, 8, 9, 10, 11, 12) avec une zone adjacente de deuxième partie du zigzag de l'élément (1, 2, 3, 4, 5, 6, 7, 8, 9, 10, 11, 12) en forme de zigzag forment un bord (1', 2', 3', 4', 6') commun entre elles, et dans laquelle les éléments (1, 2, 3, 4, 5, 6, 7, 8, 9, 10, 11, 12) en forme de zigzag sont agencés dans la couche centrale (50) de sorte que deux bords (1', 2', 3', 4', 6') de ce type de deux éléments (1, 2, 3, 4, 5, 6, 7, 8, 9, 10, 11, 12) en forme de zigzag, qui peuvent être identiques ou différents l'un de l'autre, se croisent en formant un angle qui est différent de zéro, dans laquelle les deux éléments (1, 2, 3, 4, 5, 6, 7, 8, 9, 10, 11, 12) sont reliés solidement l'un à l'autre au point de croisement (70), dans laquelle les éléments (1, 2, 3, 4, 5, 6, 7, 8, 9, 10, 11, 12) en bois comprennent dans la couche centrale (50) un ou plusieurs des agencements (a) à (d) suivants :
(a) les zones en forme de plaquette (20, 30) des éléments en bois (1, 5) sont des surfaces planes et le bord formé entre les surfaces planes est une surface plane (1') ;
(b) les zones en forme de plaquette (20, 30) des éléments en bois (2, 6) sont des surfaces courbées et le bord formé entre les surfaces courbées est une surface courbée (2') ;
(c) les zones en forme de plaquette (20, 30) des éléments en bois (3, 7) sont des surfaces courbées et le bord formé entre les surfaces courbées est rectiligne (3');
(d) les zones en forme de plaquette (20, 30) des éléments en bois (4, 8) sont des surfaces courbées et le bord formé entre les surfaces courbées est une surface plane (4') ;
et dans laquelle
(α) les éléments (1, 2, 3, 4, 5, 6, 7, 8, 9, 10, 11, 12) en bois sont répartis dans la couche centrale (50) de manière aléatoire ; ou
(β) les éléments en bois sont agencés les uns à côté des autres et les uns au-dessus des autres de manière aléatoire dans la couche centrale ; ou
(γ) les éléments en bois sont agencés de manière aléatoire dans la couche centrale, et les bords se croisent en formant différents angles ;
**caractérisé en ce que** les éléments (1, 2, 3, 4, 5, 6, 7, 8, 9, 10, 11, 12) en bois en forme de zigzag comprennent des fibres présentant une direction préférentielle, dans laquelle le bord (1', 2', 3', 4', 6') commun ou les bords (1', 2', 3', 4', 6') communs ne s'étend(ent) pas parallèlement à la direction préférentielle ; ou
le bord (1', 2', 3', 4', 6') commun ou les bords (1', 2', 3', 4', 6') communs s'étend(ent) perpendiculairement à la direction préférentielle.

2. Couche centrale (50) selon la revendication 1, dans laquelle les éléments (1, 2, 3, 4, 5, 6, 7, 8, 9, 10, 11, 12) en bois en forme de zigzag comprennent des unités récurrentes composées de zones de première partie et de deuxième partie du zigzag (20, 30), de telle manière que les éléments (1, 2, 3, 4, 5, 6, 7, 8, 9, 10, 11, 12) en bois présentent la forme d'une onde, dans laquelle les bords (1', 2', 3', 4', 6') communs formés entre les zones s'étendent de préférence parallèlement les uns aux autres.

3. Couche centrale (50) selon la revendication 2, dans laquelle l'onde de l'élément en bois (9, 10, 11, 12) en forme de zigzag comprend au moins une demi-onde positive ainsi qu'une demi-onde négative.

4. Couche centrale (50) selon la revendication 2, dans laquelle l'onde de l'élément en bois (9, 10, 11, 12) en forme de zigzag comprend au moins deux demi-ondes positives, mais aucune demi-onde négative.

5. Couche centrale (50) selon l'une quelconque des revendications 2 ou 3, dans laquelle l'onde est formée par
(a') des éléments en bois (a) (5), de telle manière que l'onde, vue en coupe longitudinale, présente des unités récurrentes se présentant sous forme d'un trapèze ; ou
(b') des éléments en bois (b) (6), de telle manière que l'onde, vue en coupe longitudinale, présente des unités récurrentes se présentant sous forme d'une fonction sinusoïdale.

6. Couche centrale (50) selon l'une quelconque des revendications précédentes, dans laquelle la longueur des fibres d'un élément (1, 2, 3, 4, 5, 6, 7, 8, 9, 10, 11, 12) en bois en forme de zigzag est au moins deux fois plus longue que l'épaisseur d'une zone de première partie ou de deuxième partie du zigzag ou de l'élément (1, 2, 3, 4, 5, 6, 7, 8, 9, 10, 11, 12) en bois en forme de zigzag.

7. Couche centrale (50) selon l'une quelconque des revendications précédentes, dans laquelle l'épaisseur d'une zone de première partie ou de deuxième partie du zigzag (20, 30) se situe dans la plage de 0,2 mm à 2 mm et/ou la hauteur H d'un élément (1, 2, 3, 4, 5, 6, 7, 8, 9, 10, 11, 12) en forme de zigzag se situe dans la plage de 0,8 mm à 8 mm et/ou la longueur L d'un bord (1', 2', 3', 4', 6') se situe dans la plage de 0,5 cm à 10 cm ; ou
dans laquelle la hauteur (H) d'une zone de première ou de deuxième partie du zigzag (20, 30) atteint au maximum un dixième de l'épaisseur de la couche centrale (50).

8. Couche centrale (50) selon l'une quelconque des revendications précédentes, dans laquelle chaque élément (1, 2, 3, 4, 5, 6, 7, 8, 9, 10, 11, 12) en bois en forme de zigzag est collé à un élément à surface plane, de telle manière que l'élément (1, 2, 3, 4, 5, 6, 7, 8, 9, 10, 11, 12) en bois en forme de zigzag et l'élément à surface plane forment une ou plusieurs cavités entre eux.

9. Couche centrale (50) selon l'une quelconque des revendications 1 à 8, dans laquelle la couche centrale (50) comprend au moins un élément (1, 2, 3, 4, 5, 6, 7, 8, 9, 10, 11, 12) en bois en forme de zigzag, lequel est collé à un élément à surface plane, de telle manière que l'élément (1, 2, 3, 4, 5, 6, 7, 8, 9, 10, 11, 12) en forme de zigzag et l'élément à surface plane forment une ou plusieurs cavités entre eux ; ou
dans laquelle la couche centrale (50) comprend au moins un élément (1, 2, 3, 4, 5, 6, 7, 8, 9, 10, 11, 12) en bois en forme de zigzag, lequel est collé à deux éléments à surface plane, de telle manière que l'élément (1, 2, 3, 4, 5, 6, 7, 8, 9, 10, 11, 12) en forme de zigzag et les éléments à surface plane forment plusieurs cavités entre eux, dans laquelle l'élément (1, 2, 3, 4, 5, 6, 7, 8, 9, 10, 11, 12) en bois en forme de zigzag est entouré en sandwich par les éléments plans ; ou
dans laquelle la couche centrale (50) comprend au moins un élément, lequel comprend deux éléments (1, 2, 3, 4, 5, 6, 7, 8, 9, 10, 11, 12) en bois en forme de zigzag, lesquels sont collés à un élément à surface plane, de telle manière que les éléments (1, 2, 3, 4, 5, 6, 7, 8, 9, 10, 11, 12) en forme de zigzag et l'élément à surface plane forment plusieurs cavités entre eux, dans laquelle l'élément à surface plane est entouré en sandwich par les deux éléments en bois en forme de zigzag.

10. Couche centrale (50) selon l'une quelconque des revendications précédentes, dans laquelle les éléments (1, 2, 3, 4, 5, 6, 7, 8, 9, 10, 11, 12) en bois en forme de zigzag sont constitués exclusivement de bois ; ou
couche centrale (50) selon l'une quelconque des revendications précédentes, dans laquelle la surface des éléments (1, 2, 3, 4, 5, 6, 7, 8, 9, 10, 11, 12) en bois en forme de zigzag est revêtue au moins en partie de lignine ; ou
couche centrale (50) selon l'une quelconque des revendications précédentes, dans laquelle les éléments (1, 2, 3, 4, 5, 6, 7, 8, 9, 10, 11, 12) en bois en forme de zigzag sont constitués exclusivement de bois ; et dans laquelle la surface des éléments (1, 2, 3, 4, 5, 6, 7, 8, 9, 10, 11, 12) en bois en forme de zigzag est revêtue au moins en partie de lignine.

11. Procédé de fabrication d'une couche centrale (50) selon l'une quelconque des revendications précédentes, comprenant au moins les étapes (i) à (iii) :
(i) la fourniture d'éléments (1, 2, 3, 4, 5, 6, 7, 8, 9, 10, 11, 12) en bois en forme de zigzag, lesquels présentent des zones (20, 30) en forme de plaquette qui sont agencées en zigzag, dans lequel une zone de première partie du zigzag d'un élément (1, 2, 3, 4, 5, 6, 7, 8, 9, 10, 11, 12) avec une zone de deuxième partie adjacente du zigzag de l'élément (1, 2, 3, 4, 5, 6, 7, 8, 9, 10, 11, 12) forment un bord (1', 2', 3', 4', 6') commun entre elles ;
(ii) l'agencement des éléments (1, 2, 3, 4, 5, 6, 7, 8, 9, 10, 11, 12) de l'étape (i), de telle manière que deux bords (1', 2', 3', 4', 6') de ce type de deux éléments (1, 2, 3, 4, 5, 6, 7, 8, 9, 10, 11, 12) se croisent en formant un angle qui est différent de zéro ;
(iii) la liaison solide des bords (1', 2', 3', 4', 6') de l'étape (ii), de préférence au moyen d'une colle.

12. Composite multicouche (40), comprenant au moins une couche de recouvrement (60, 60') et une couche centrale (50), dans lequel la couche de recouvrement (60, 60') est agencée de manière à recouvrir au moins en partie la couche centrale (50) et est reliée solidement à celle-ci, dans lequel la couche centrale (50) est une couche centrale (50) telle que celle définie dans l'une des revendications 1 à 10.

13. Composite multicouche (40) selon la revendication 12, dans lequel la couche de recouvrement comprend un matériau sélectionné parmi : le lamibois, le bois stratifié, le panneau de particules, le panneau de fibres, le contreplaqué, le panneau de matière plastique, le placoplâtre, la tôle, le fibrociment, et parmi deux de ces derniers ou plus.

14. Utilisation d'une couche centrale (50) selon l'une quelconque des revendications 1 à 10 ; ou utilisation d'un composite multicouche selon l'une quelconque des revendications 12 à 13 ; pour la fabrication de meubles, pour des étagères, pour des emballages destinés au transport, pour des aménagements intérieurs, dans des portes et des portails, ainsi que dans la construction automobile et navale.
